# EUROPEAN PATENT APPLICATION

(11) **EP 4 300 308 A1**
(43) Date of publication of application: **03.01.2024**
(21) Application number: 22766409.1
(22) Date of filing: 14.03.2022
(51) Int. Cl.: G06F 9/50

(54) **METHOD AND DEVICE FOR ACHIEVING MEMORY SHARING CONTROL, COMPUTER DEVICE, AND SYSTEM**

(30) Priority: 12.03.2021 CN 202110270731; 31.03.2021 CN 202110351637
(71) Applicant: Huawei Technologies Co., Ltd., Shenzhen, Guangdong 518129 (CN)
(72) Inventor: ZHOU, Yigang, Shenzhen, Guangdong 518129 (CN); ZHU, Xiaoming, Shenzhen, Guangdong 518129 (CN); ZHOU, Guanfeng, Shenzhen, Guangdong 518129 (CN)
(74) Representative: Huawei European IPR
(86) International application number: PCT/CN2022/080620
(87) International publication number: WO 2022/188887

(57) **Abstract**

A memory sharing control method and device, a computer device, and a system are provided, to improve utilization of memory resources. In the computer device, a memory sharing control device is deployed between a processor and a memory pool, and the processor accesses the memory pool via the memory sharing control device. Different processing units, for example, processors or cores in processors, access at least one memory in the memory pool in different time periods, so that the memory is shared by a plurality of processing units, and utilization of memory resources is improved.

## Description

### TECHNICAL FIELD

This application relates to the field of information technologies, and in particular, to a memory sharing control method and device, and a system.

### BACKGROUND

With popularization of big data technologies, applications in various fields have increasing requirements on computing resources. Large-scale computing represented by applications such as graph computing and deep learning represents a latest application development direction. In addition, with slowdown of semiconductor technology development, scalable performance of the applications cannot be continuously improved during processor upgrade, and multi-core processors gradually become a mainstream.

A multi-core processor system has an increasingly high requirement for a capacity of a memory. As an indispensable component in a server, cost of the memory accounts for 30% to 40% of total cost of operations of the server. Improving utilization of the memory is an important means to reduce the total cost of operations (total cost of operations, TCO).

### SUMMARY

This application provides a memory sharing control method and device, a computer device, and a system, to improve utilization of memory resources.

According to a first aspect, this application provides a computer device, including at least two processing units, a memory sharing control device, and a memory pool, where the processing unit is a processor, a core in a processor, or a combination of cores in a processor, and the memory pool includes one or more memories;
the at least two processing units are coupled to the memory sharing control device;
the memory sharing control device is configured to separately allocate a memory from the memory pool to the at least two processing units, and at least one memory in the memory pool is accessible by different processing units in different time periods; and
the at least two processing units are configured to access the allocated memory via the memory sharing control device.

The at least two processing units in the computer device can access the at least one memory in the memory pool in different time periods via the memory sharing control device, to implement memory sharing by a plurality of processing units, so that utilization of memory resources is improved.

Optionally, that at least one memory in the memory pool is accessible by different processing units in different time periods means that any two of the at least two processing units can separately access the at least one memory in the memory pool in different time periods. For example, the at least two processing units include a first processing unit and a second processing unit. In a first time period, a first memory in the memory pool is accessed by the first processing unit, and the second processing unit cannot access the first memory. In a second time period, the first memory in the memory pool is accessed by the second processing unit, and the first processing unit cannot access the first memory. Optionally, the processor may be a central processing unit (central processing unit, CPU), and one CPU may include two or more cores.

Optionally, one of the at least two processing units may be a processor, a core in a processor, a combination of a plurality of cores in a processor, or a combination of a plurality of cores in different processors. The combination of the plurality of cores in the processor is used as a processing unit, or the combination of the plurality of cores in the different processors is used as a processing unit. In this way, in a parallel computing scenario, a plurality of different cores access a same memory when executing tasks in parallel, so that efficiency of performing parallel computing by the plurality of different cores can be improved.

Optionally, the memory sharing control device may separately allocate a memory from the memory pool to the at least two processing units based on a received control instruction sent by an operating system in the computer device. Specifically, a driver in the operating system may send, to the memory sharing control device over a dedicated channel, the control instruction used to allocate the memory in the memory pool to the at least two processing units. The operating system is implemented by the CPU in the computer device by executing related code. The CPU that runs the operating system has a privilege (privilege) mode, and in this mode, the driver in the operating system can send the control instruction to the memory sharing control device over a dedicated or specified channel.

Optionally, the memory sharing control device may be implemented by using a field programmable gate array (field programmable gate array, FPGA) chip, an application-specific integrated circuit (application-specific integrated circuit, ASIC), or another similar chip. Circuit functions of the ASIC have been defined at the beginning of design, and the ASIC is featured in high chip integration, being easy to implement mass tapeouts, low cost of a single tapeout, a small size, and the like.

In some possible implementations, the at least two processing units are connected to the memory sharing control device via a serial bus; and
a first processing unit in the at least two processing units is configured to send a first memory access request in a serial signal form to the memory sharing device via the serial bus, where the first memory access request is used to access a first memory allocated to the first processing unit.

The serial bus has characteristics of high bandwidth and low latency. The at least two processing units are connected to the memory sharing control device via the serial bus, so that efficiency of data transmission between the processing unit and the memory sharing control device can be ensured.

Optionally, the serial bus is a memory semantic bus. The memory semantic bus includes but is not limited to a quick path interconnect (quick path interconnect, QPI), peripheral component interconnect express (peripheral component interconnect express, PCIe), Huawei cache coherence system (Huawei Cache Coherence System, HCCS), or compute express link (compute express link, CXL) interconnect-based bus.

Optionally, the memory access request generated by the first processing unit is a memory access request in a parallel signal form. The first processing unit may convert the memory access request in the parallel signal form into the first memory access request in the serial signal form through an interface that can implement conversion between a parallel signal and a serial signal, for example, a Serdes interface, and send the first memory access request in the serial signal form to the memory sharing device via the serial bus.

In some possible implementations, the memory sharing control device includes a processor interface, and the processor interface is configured to:
receive the first memory access request; and
convert the first memory access request into a second memory access request in a parallel signal form.

The processor interface converts the first memory access request into a second memory access request in a parallel signal form, so that the memory sharing control device can access the first memory, and implement memory sharing without changing an existing memory access architecture.

Optionally, the processor interface is the interface that can implement the conversion between the parallel signal and the serial signal, for example, may be the Serdes interface.

In some possible implementations, the memory sharing control device includes a control unit, and the control unit is configured to:
establish a correspondence between a memory address of the first memory in the memory pool and the first processing unit in the at least two processing units, to allocate the first memory from the memory pool to the first processing unit.

Optionally, the correspondence between the memory address of the first memory and the first processing unit may be dynamically adjusted. For example, the correspondence between the memory address of the first memory and the first processing unit may be dynamically adjusted as required.

Optionally, the memory address of the first memory may be a segment of consecutive physical memory addresses in the memory pool. The segment of consecutive physical memory addresses in the memory pool can simplify management of the first memory. Certainly, the memory address of the first memory may alternatively be several segments of inconsecutive physical memory addresses in the memory pool.

Optionally, memory address information of the first memory includes a start address of the first memory and a size of the first memory. The first processing unit has an identifier, and the establishing a correspondence between a memory address of the first memory and the first processing unit may be establishing a correspondence between the unique identifier of the first processing unit and the memory address information of the first memory.

In some possible implementations, the memory sharing control device includes a control unit, and the control unit is configured to:
virtualize a plurality of virtual memory devices from the memory pool, where a physical memory corresponding to a first virtual memory device in the plurality of virtual memory devices is the first memory; and
allocate the first virtual memory device to the first processing unit. Optionally, the virtual memory device corresponds to a segment of consecutive physical memory addresses in the memory pool. The virtual memory device corresponds to a segment of consecutive physical memory addresses in the memory pool, so that management of the virtual memory device can be simplified. Certainly, the virtual memory device may alternatively correspond to several segments of inconsecutive physical memory addresses in the memory pool.

Optionally, the first virtual memory device may be allocated to the first processing unit by establishing an access control table. For example, the access control table may include information such as the identifier of the first processing unit, an identifier of the first virtual memory device, and the start address and the size of the memory corresponding to the first virtual memory device. The access control table may further include permission information of accessing the first virtual memory device by the first processing unit, attribute information of a memory to be accessed (including but not limited to information about whether the memory is a persistent memory), and the like.

In some possible implementations, the control unit is further configured to:
cancel the correspondence between the first virtual memory device and the first processing unit when a preset condition is met; and
establish a correspondence between the first virtual memory device and a second processing unit in the at least two processing units.

Optionally, the correspondence between the virtual memory device and the processing unit may be dynamically adjusted based on a memory resource requirement of the at least two processing units.

The correspondence between the virtual memory device and the processing unit is dynamically adjusted, so that memory resource requirements of different processing units in different service scenarios can be flexibly adapted, and utilization of memory resources can be improved.

Optionally, the preset condition may be that a memory access requirement of the first processing unit decreases, and a memory access requirement of the second processing unit increases.

Optionally, the control unit is further configured to:
cancel the correspondence between the first memory and the first virtual memory device when the preset condition is met; establish a correspondence between the first memory and a second virtual memory device in the plurality of virtual memory devices; and allocate the second virtual memory device to the second processing unit in the at least two processing units. In this case, it is not necessary to change the correspondence between the virtual memory device and the physical memory address in the memory pool, and only a correspondence between the virtual memory device and a different processing unit needs to be changed, so that different processing units can access the same physical memory in different time periods.

In some possible implementations, the memory sharing control device further includes a cache unit, and the cache unit is configured to: cache data read by any one of the at least two processing units from the memory pool, or cache data evicted by any one of the at least two processing units.

Efficiency of accessing the memory data by the processing unit can be further improved by using the cache unit.

Optionally, the cache unit may include a level 1 cache and a level 2 cache. The level 1 cache may be a small-capacity cache with a read/write speed higher than that of the level 2 cache. For example, the level 1 cache may be a 100-megabyte (megabyte, MB) nanosecond-level cache. The level 2 cache may be a large-capacity cache with a read/write speed lower than that of the level 1 cache. For example, the level 2 cache may be a 1-gigabyte (gigabyte, GB) dynamic random access memory (dynamic random access memory, DRAM). The level 1 cache and the level 2 cache are used, so that while a data access speed of the processor can be improved by using the caches, cache space can be increased, a range in which the processor quickly accesses the memory by using the caches is expanded, and a memory access rate of the processor resource pool is further improved generally.

Optionally, the data in the memory may be first cached in the level 2 cache, and the data in the level 2 cache is then cached in the level 1 cache based on a requirement of the processing unit for the memory data. Alternatively, the data that is evicted by the processing unit or does not need to be processed temporarily may be cached in the level 1 cache, and some data evicted by the processing unit in the level 1 cache may be cached in the level 2 cache, to ensure that the level 1 cache has sufficient space for other processing units to cache data for use.

In some possible implementations, the memory sharing control device further includes a prefetch engine, and the prefetch engine is configured to: prefetch, from the memory pool, the data that needs to be read by any one of the at least two processing units, and cache the data in the cache unit.

Optionally, the prefetch engine may implement intelligent data expectation by using a specified algorithm or a related artificial intelligence (artificial intelligence, AI) algorithm, to further improve efficiency of accessing the memory data by the processing unit.

In some possible implementations, the memory sharing control device further includes a quality of service (quality of service, QoS) engine, and the QoS engine is configured to implement optimized storage of the data that needs to be cached by any one of the at least two processing units in the cache unit. By using the QoS engine, different capabilities of caching, in the cache unit 304, the memory data accessed by different processing units can be implemented. For example, a memory access request initiated by a processing unit with a high priority has exclusive cache space in the cache unit 304. In this way, it can be ensured that the data accessed by the processing unit can be cached in time, so that service processing quality of this type of processing unitis ensured.

In some possible implementations, the memory sharing control device further includes a compression/decompression engine, and the compression/decompression engine is configured to: compress or decompress data related to memory access.

Optionally, a function of the compression/decompression engine may be disabled.

The compression/decompression engine may compress, by using a compression ratio algorithm and at a granularity of 4 kilobits (kilobit, KB) per page, data written by the processing unit into the memory, and then write compressed data into the memory; or decompress data to be read when the processing unit reads compressed data in the memory, and then send the decompressed data to the processor. In this way, a data transmission rate can be improved, and efficiency of accessing the memory data by the processing unit can be further improved. Optionally, the compression/decompression engine may be disabled.

Optionally, the memory sharing control device further includes a storage unit, where the storage unit includes software code of at least one of the QoS engine, the prefetch engine, and the compression/decompression engine. The memory sharing control device may read the code in the storage unit to implement a corresponding function.

Optionally, the at least one of the QoS engine, the prefetch engine, and the compression/decompression engine may be implemented by using control logic of the memory sharing control device.

In some possible implementations, the first processing unit further has a local memory, and the local memory is used for memory access of the first processing unit. Optionally, the first processing unit may preferentially access the local memory. The first processing unit has a higher speed of accessing the local memory, so that the speed of accessing the memory by the first processing unit can be further improved.

In some possible implementations, the plurality of memories included in the memory pool are of different medium types. For example, the memory pool may include at least one of the following memory media: a DRAM, a phase change memory (phase change memory, PCM), a storage class memory (storage class memory, SCM), a static random access memory (static random access memory, SRAM), a programmable read-only memory (programmable read-only memory, PROM), an erasable programmable read-only memory (erasable programmable read-only memory, EPROM), a NAND flash memory (NAND FLASH Memory), a spin-transfer torque random access memory (spin-transfer torque random access memory, STT-RAM), or a resistive random access memory (resistive random access memory, RRAM). The memory pool may further include a dual in-line memory module (dual in-line memory module, DIMM), or a solid-state disk (solid-state disk, SSD).

Different memory media can meet memory resource requirements when different processing units process different services. For example, the DRAM has features of a high read/write speed and volatility, and a memory of the DRAM may be allocated to a processing unit that initiates hot data access. The PCM has a non-volatile feature, and a memory of the PCM may be allocated to a processing unit that accesses data that needs to be stored for a long term. In this way, flexibility of memory access control can be improved while a memory resource is shared.

For example, the memory pool includes a volatile DRAM storage medium and a non-volatile PCM storage medium. The DRAM and the PCM in the memory pool may be in a parallel architecture, and have no hierarchical levels. Alternatively, a non-parallel architecture in which the DRAM is used as a cache and the PCM is used as a main memory may be used. The DRAM may be used as a first-level storage medium, and the PCM is used as a second-level storage medium. For the architecture in which the DRAM and the PCM are parallel to each other, the control unit may store frequently-accessed hot data in the DRAM, in other words, establish a correspondence between a processing unit that initiates to access frequently-accessed hot data and a virtual memory device corresponding to the memory of the DRAM. In this way, a read/write speed of the memory data and a service life of a main memory system can be improved. The control unit may further establish a correspondence between a processing unit that initiates to access less frequently-accessed cold data and a virtual memory device corresponding to the memory of the PCM, to store the less frequently-accessed cold data in the PCM. In this way, security of important data can be ensured based on the non-volatile feature of the PCM. For the architecture in which the DRAM and the PCM are not parallel to each other, based on features of high integration of the PCM and low read/write latency of the DRAM, the control unit may use the PCM as a main memory to store various types of data, and use the DRAM as a cache. In this way, memory access efficiency and performance can be further improved.

According to a second aspect, this application provides a system, including at least two computer devices according to the first aspect, and the at least two computer devices according to the first aspect are connected to each other through a network.

A computer device of the system can not only access a memory pool on the computer device via a memory sharing control device, to improve memory utilization, but also access a memory pool on another computer device through a network. A range of the memory pool is expanded, so that utilization of memory resources can be further improved.

Optionally, the memory sharing control device in the computer device in the system may alternatively have a function of a network adapter, and can send an access request of a processing unit to another computer device in the system through the network, to access a memory of the another computer device.

Optionally, the computer device in the system may alternatively include a network adapter having a serial-to-parallel interface (for example, a Serdes interface). The memory sharing control device in the computer device may send, by using the network adapter, a memory access request of a processing unit to another computer device in the system through the network, to access a memory of the another computer device.

Optionally, the computer device in the system may be connected through an Ethernet-based network or a unified bus (unified bus, U-bus)-based network.

According to a third aspect, this application provides a memory sharing control device, where the memory sharing control device includes a control unit, a processor interface, and a memory interface.

The processor interface is configured to receive memory access requests sent by at least two processing units, where the processing unit is a processor, a core in a processor, or a combination of cores in a processor.

The control unit is configured to separately allocate a memory from a memory pool to the at least two processing units, where at least one memory in the memory pool is accessible by different processing units in different time periods.

The control unit is further configured to access, through the memory interface, the memory allocated to the at least two processing units.

Via the memory sharing control device, different processing units can access the at least one memory in the memory pool in different time periods, so that a memory resource requirement of the processing units can be met, and utilization of memory resources is improved.

Optionally, that at least one memory in the memory pool is accessible by different processing units in different time periods means that any two of the at least two processing units can separately access the at least one memory in the memory pool in different time periods. For example, the at least two processing units include a first processing unit and a second processing unit. In a first time period, a first memory in the memory pool is accessed by the first processing unit, and the second processing unit cannot access the first memory. In a second time period, the first memory in the memory pool is accessed by the second processing unit, and the first processing unit cannot access the first memory.

Optionally, the memory interface may be a double data rate (double data rate, DDR) controller, or the memory interface may be a memory controller with a PCM control function.

Optionally, the memory sharing control device may separately allocate a memory from the memory pool to the at least two processing units based on a received control instruction sent by an operating system in the computer device. Specifically, a driver in the operating system may send, to the memory sharing control device over a dedicated channel, the control instruction used to allocate the memory in the memory pool to the at least two processing units. The operating system is implemented by the CPU in the computer device by executing related code. The CPU that runs the operating system has a privilege (privilege) mode, and in this mode, the driver in the operating system can send the control instruction to the memory sharing control device over a dedicated or specified channel.

Optionally, the memory sharing control device may be implemented by an FPGA chip, an ASIC, or another similar chip.

In some possible implementations, the processor interface is further configured to receive, via a serial bus, a first memory access request sent in a serial signal form by a first processing unit in the at least two processing units, where the first memory access request is used to access a first memory allocated to the first processing unit.

The serial bus has characteristics of high bandwidth and low latency. The first memory access request sent by the first processing unit in the at least two processing units in the serial signal form is received via the serial bus, so that efficiency of data transmission between the processing unit and the memory sharing control device can be ensured.

Optionally, the serial bus is a memory semantic bus. The memory semantic bus includes but is not limited to a QPI, PCIe, HCCS, or CXL protocol interconnect-based bus.

In some possible implementations, the processor interface is further configured to: convert the first memory access request into a second memory access request in a parallel signal form, and send the second memory access request to the control unit.

The control unit is further configured to access the first memory based on the second memory access request through the memory interface.

Optionally, the processor interface is the interface that can implement the conversion between the parallel signal and the serial signal, for example, may be the Serdes interface.

In some possible implementations, the control unit is further configured to establish a correspondence between a memory address of the first memory in the memory pool and the first processing unit, to allocate the first memory from the memory pool to the first processing unit.

Optionally, the correspondence between the memory address of the first memory and the first processing unit is dynamically adjustable. For example, the correspondence between the memory address of the first memory and the first processing unit may be dynamically adjusted as required.

Optionally, the memory address of the first memory may be a segment of consecutive physical memory addresses in the memory pool. The segment of consecutive physical memory addresses in the memory pool can simplify management of the first memory. Certainly, the memory address of the first memory may alternatively be several segments of inconsecutive physical memory addresses in the memory pool.

Optionally, memory address information of the first memory includes a start address of the first memory and a size of the first memory. The first processing unit has an identifier, and the establishing a correspondence between a memory address of the first memory and the first processing unit may be establishing a correspondence between the unique identifier of the first processing unit and the memory address information of the first memory. In some possible implementations, the control unit is further configured to: virtualize a plurality of virtual memory devices from the memory pool, where a physical memory corresponding to a first virtual memory device in the plurality of virtual memory devices is the first memory; and
allocate the first virtual memory device to the first processing unit.

Optionally, the virtual memory device corresponds to a segment of consecutive physical memory addresses in the memory pool. The virtual memory device corresponds to a segment of consecutive physical memory addresses in the memory pool, so that management of the virtual memory device can be simplified. Certainly, the virtual memory device may alternatively correspond to several segments of inconsecutive physical memory addresses in the memory pool.

Optionally, the first virtual memory device may be allocated to the first processing unit by establishing an access control table. For example, the access control table may include information such as the identifier of the first processing unit, an identifier of the first virtual memory device, and the start address and the size of the memory corresponding to the first virtual memory device. The access control table may further include permission information of accessing the first virtual memory device by the first processing unit, attribute information of a memory to be accessed (including but not limited to information about whether the memory is a persistent memory), and the like.

In some possible implementations, the control unit is further configured to: cancel a correspondence between the first virtual memory device and the first processing unit when a preset condition is met, and establish a correspondence between the first virtual memory device and a second processing unit in the at least two processing units.

Optionally, the correspondence between the virtual memory device and the processing unit may be dynamically adjusted based on a memory resource requirement of the at least two processing units.

The correspondence between the virtual memory device and the processing unit is dynamically adjusted, so that memory resource requirements of different processing units in different service scenarios can be flexibly adapted, and utilization of memory resources can be improved.

Optionally, the control unit is further configured to:
cancel the correspondence between the first memory and the first virtual memory device when the preset condition is met; establish a correspondence between the first memory and a second virtual memory device in the plurality of virtual memory devices; and allocate the second virtual memory device to the second processing unit in the at least two processing units. In this case, it is not necessary to change the correspondence between the virtual memory device and the physical memory address in the memory pool, and only a correspondence between the virtual memory device and a different processing unit needs to be changed, so that different processing units can access the same physical memory in different time periods. In some possible implementations, the memory sharing control device further includes a cache unit.

The cache unit is configured to: cache data read by any one of the at least two processing units from the memory pool, or cache data evicted by any one of the at least two processing units.

Efficiency of accessing the memory data by the processing unit can be further improved by using the cache unit.

Optionally, the cache unit may include a level 1 cache and a level 2 cache. The level 1 cache may be a small-capacity cache with a read/write speed higher than that of the level 2 cache. For example, the level 1 cache may be a 100-MB nanosecond-level cache. The level 2 cache may be a large-capacity cache with a read/write speed lower than that of the level 1 cache. For example, the level 2 cache may be a 1-GB DRAM. The level 1 cache and the level 2 cache are used, so that while a data access speed of the processor can be improved by using the caches, cache space can be increased, a range in which the processor quickly accesses the memory by using the caches is expanded, and a memory access rate of the processor resource pool is further improved generally.

In some possible implementations, the memory sharing control device further includes a prefetch engine, and the prefetch engine is configured to: prefetch, from the memory pool, the data that needs to be read by any one of the at least two processing units, and cache the data in the cache unit.

Optionally, the prefetch engine may implement intelligent data expectation by using a specified algorithm or an AI algorithm, to further improve efficiency of accessing the memory data by the processing unit.

In some possible implementations, the memory sharing control device further includes a quality of service QoS engine.

The QoS engine is configured to implement optimized storage of the data that needs to be cached by any one of the at least two processing units in the cache unit. By using the QoS engine, different capabilities of caching, in the cache unit 304, the memory data accessed by different processing units can be implemented. For example, a memory access request initiated by a processing unit with a high priority has exclusive cache space in the cache unit 304. In this way, it can be ensured that the data accessed by the processing unit can be cached in time, so that service processing quality of this type of processing unitis ensured.

In some possible implementations, the memory sharing control device further includes a compression/decompression engine.

The compression/decompression engine is configured to: compress or decompress data related to memory access.

Optionally, a function of the compression/decompression engine may be disabled.

Optionally, the compression/decompression engine may compress, by using a compression ratio algorithm and at a granularity of 4 KB per page, data written by the processing unit into a memory, and then write the compressed data into the memory; or decompress data to be read when the processing unit reads compressed data in the memory, and then send the decompressed data to the processor. In this way, a data transmission rate can be improved, and efficiency of accessing the memory data by the processing unit can be further improved. Optionally, the compression/decompression engine may be disabled.

Optionally, the memory sharing control device may further include a storage unit, where the storage unit includes software code of at least one of the QoS engine, the prefetch engine, and the compression/decompression engine. The memory sharing control device may read the code in the storage unit to implement a corresponding function.

Optionally, the at least one of the QoS engine, the prefetch engine, and the compression/decompression engine may be implemented by using control logic of the memory sharing control device.

According to a fourth aspect, this application provides a memory sharing control method, where the method is applied to a computer device, the computer device includes at least two processing units, a memory sharing control device, and a memory pool, the memory pool includes one or more memories, and the method includes:

The memory sharing control device receives a first memory access request sent by a first processing unit in the at least two processing units, where the processing unit is a processor, a core in a processor, or a combination of cores in a processor;

The memory sharing control device allocates a first memory from the memory pool to the first processing unit, where the first memory is accessible by a second processing unit in the at least two processing units in another time period.

The first processing unit accesses the first memory via the memory sharing control device.

According to the method, different processing units access the at least one memory in the memory pool in different time periods, so that a memory resource requirement of the processing units can be met, and utilization of memory resources is improved.

In a possible implementation, the method further includes:

The memory sharing control device receives, via a serial bus, a first memory access request sent in a serial signal form by the first processing unit in the at least two processing units, where the first memory access request is used to access the first memory allocated to the first processing unit.

In a possible implementation, the method further includes:

The memory sharing control device converts the first memory access request into a second memory access request in a parallel signal form, and accesses the first memory based on the second memory access request.

In a possible implementation, the method further includes:

The memory sharing control device establishes a correspondence between a memory address of the first memory in the memory pool and the first processing unit in the at least two processing units.

In a possible implementation, the method further includes:

The memory sharing control device virtualizes a plurality of virtual memory devices from the memory pool, where a physical memory corresponding to a first virtual memory device in the plurality of virtual memory devices is the first memory.

The memory sharing control device further allocates the first virtual memory device to the first processing unit.

In a possible implementation, the method further includes:

The memory sharing control device cancels a correspondence between the first virtual memory device and the first processing unit when a preset condition is met, and establishes a correspondence between the first virtual memory device and the second processing unit in the at least two processing units.

In a possible implementation, the method further includes:

The memory sharing control device caches data read by any one of the at least two processing units from the memory pool, or caches data evicted by any one of the at least two processing units.

In a possible implementation, the method further includes:

The memory sharing control device prefetches, from the memory pool, the data that needs to be read by any one of the at least two processing units, and caching the data.

In a possible implementation, the method further includes:

The memory sharing control device controls optimized storage of the data that needs to be cached by any one of the at least two processing units in a cache storage medium.

In a possible implementation, the method further includes:
compressing or decompressing data related to memory access.

According to a fifth aspect, an embodiment of this application further provides a chip, and the chip is configured to implement a function implemented by the memory sharing control device according to the third aspect.

According to a sixth aspect, an embodiment of this application further provides a computer-readable storage medium, including program code. The program code includes instructions used to perform some or all of steps in any method provided in the fourth aspect.

According to a seventh aspect, an embodiment of this application further provides a computer program product. When the computer program product runs on a computer, any method according to the fourth aspect is enabled to be performed.

It may be understood that any memory sharing control device, computer-readable storage medium, or computer program product provided above is configured to perform a corresponding method provided above. Therefore, for an advantageous effect that can be achieved by the memory sharing control device, the computer-readable storage medium, or the computer program product, refer to an advantageous effect in the corresponding method. Details are not described herein again.

### BRIEF DESCRIPTION OF DRAWINGS

The following briefly describes the accompanying drawings required for describing embodiments. It is clear that the accompanying drawings in the following description show merely some embodiments of the present invention, and a person of ordinary skill in the art may derive other drawings from these accompanying drawings without creative efforts.
FIG. 1A is a schematic diagram of an architecture of a centralized memory sharing system;
FIG. 1B is a schematic diagram of a structure of a distributed memory sharing system;
FIG. 2A is a schematic diagram of a structure of a memory sharing control device 200 according to an embodiment of this application;
FIG. 2B is a schematic diagram of a connection relationship between a memory sharing control device 200 and each of a processor and a memory;
FIG. 3 is a schematic diagram of an internal structure of an SRAM-type FPGA according to an embodiment of this application;
FIG. 4 is a schematic diagram of a specific structure of a Serdes interface according to an embodiment of this application;
FIG. 5 is a schematic diagram of an internal structure of a memory controller 500 according to an embodiment of this application;
FIG. 6 is a schematic diagram of a structure of a processor 210 according to an embodiment of this application;
FIG. 7A is a schematic diagram of a structure of a memory sharing control device 300 according to an embodiment of this application;
FIG. 7B is a schematic diagram of a structure of another memory sharing control device 300 according to an embodiment of this application;
FIG. 7C is a schematic diagram of a structure of a memory sharing control device 300 including a cache unit according to an embodiment of this application;
FIG. 7D is a schematic diagram of a structure of a memory sharing control device 300 including a storage unit according to an embodiment of this application;
FIG. 7E is a schematic diagram of a structure of a connection relationship between a memory sharing control device 300 and a memory pool according to an embodiment of this application;
FIG. 7F is a schematic diagram of a structure of another connection relationship between a memory sharing control device 300 and a memory pool according to an embodiment of this application;
FIG. 8A-1 is a schematic diagram of a structure of a computer device 80a according to an embodiment of this application;

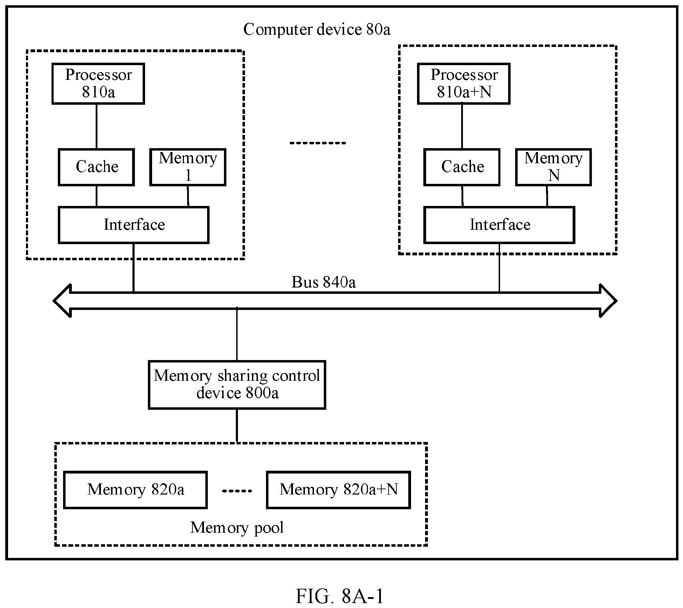

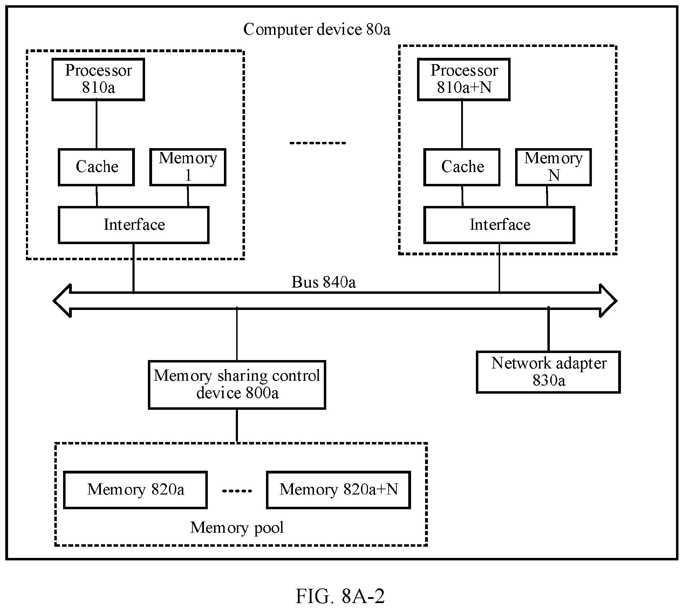

FIG. 8A-2 is a schematic diagram of a structure of another computer device 80a according to an embodiment of this application;

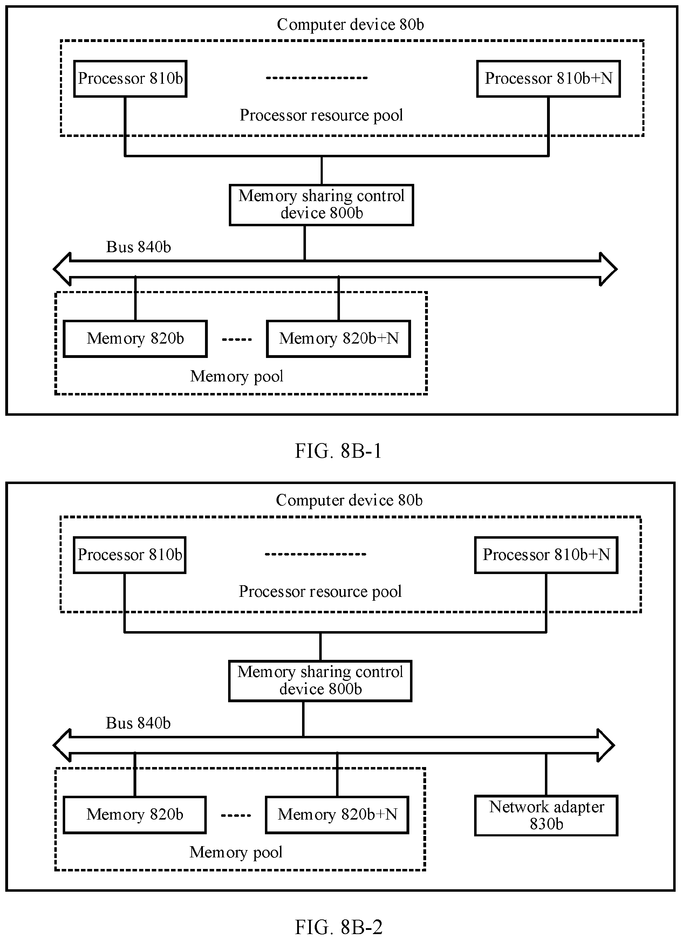

FIG. 8B-1 is a schematic diagram of a structure of a computer device 80b according to an embodiment of this application;
FIG. 8B-2 is a schematic diagram of a structure of another computer device 80b according to an embodiment of this application;

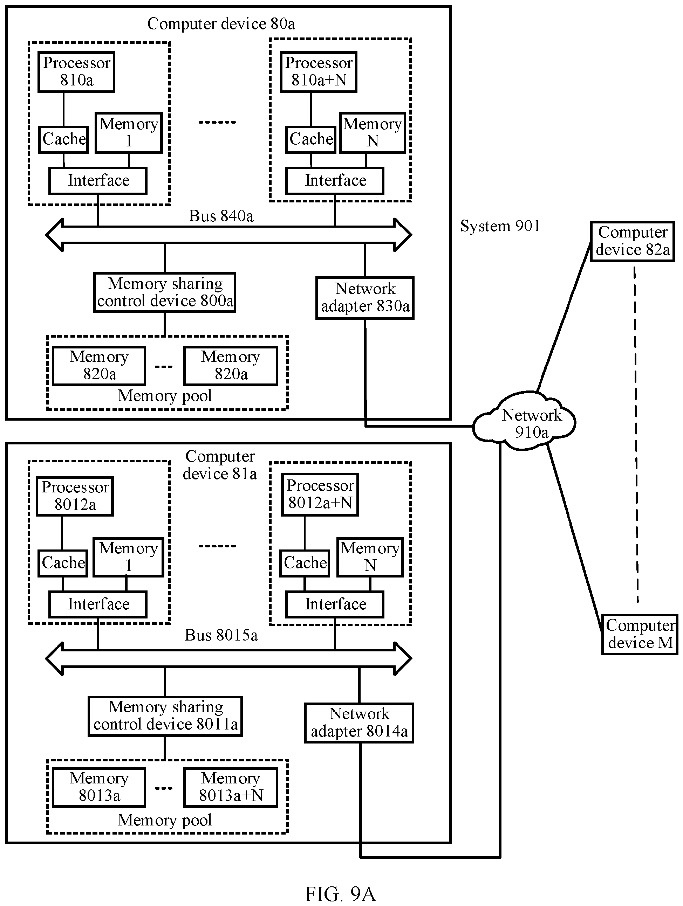

FIG. 9A is a schematic diagram of a structure of a system 901 according to an embodiment of this application;

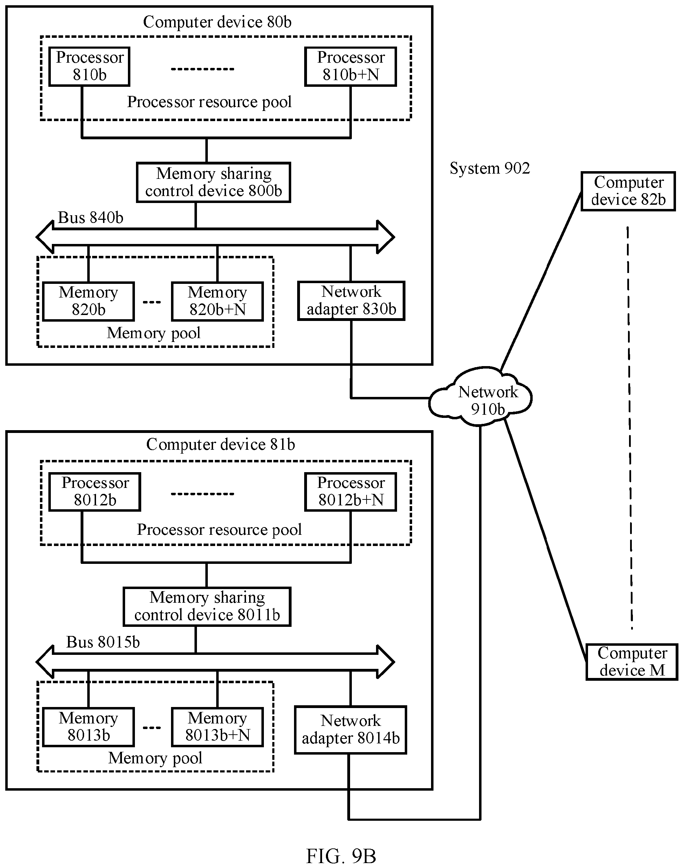

FIG. 9B is a schematic diagram of a structure of a system 902 according to an embodiment of this application;

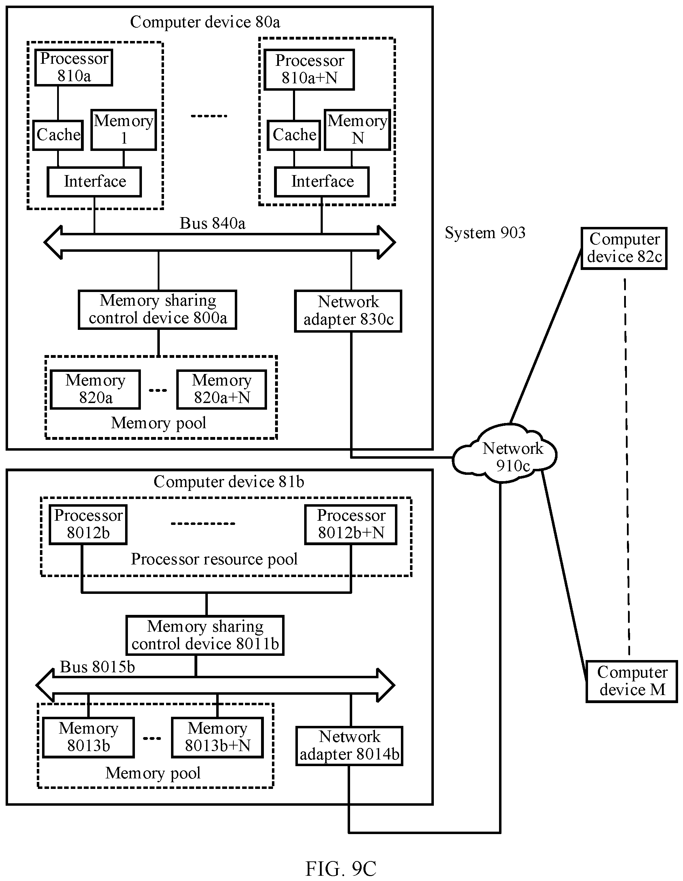

FIG. 9C is a schematic diagram of a structure of a system 903 according to an embodiment of this application;

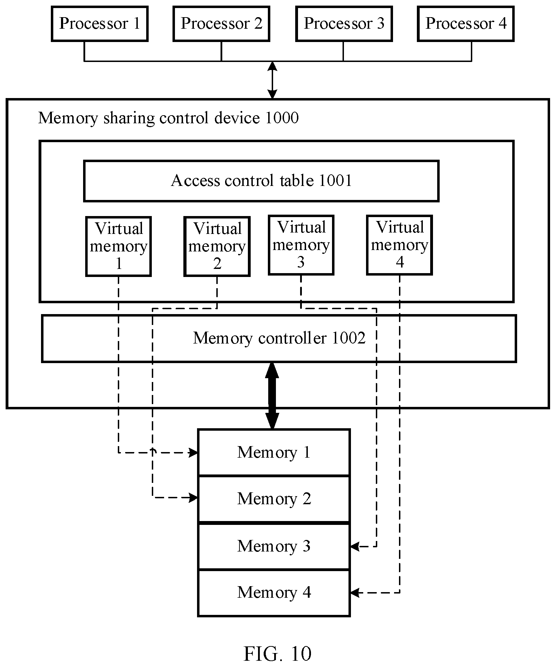

FIG. 10 is a schematic logical diagram of implementing memory sharing according to an embodiment of this application;

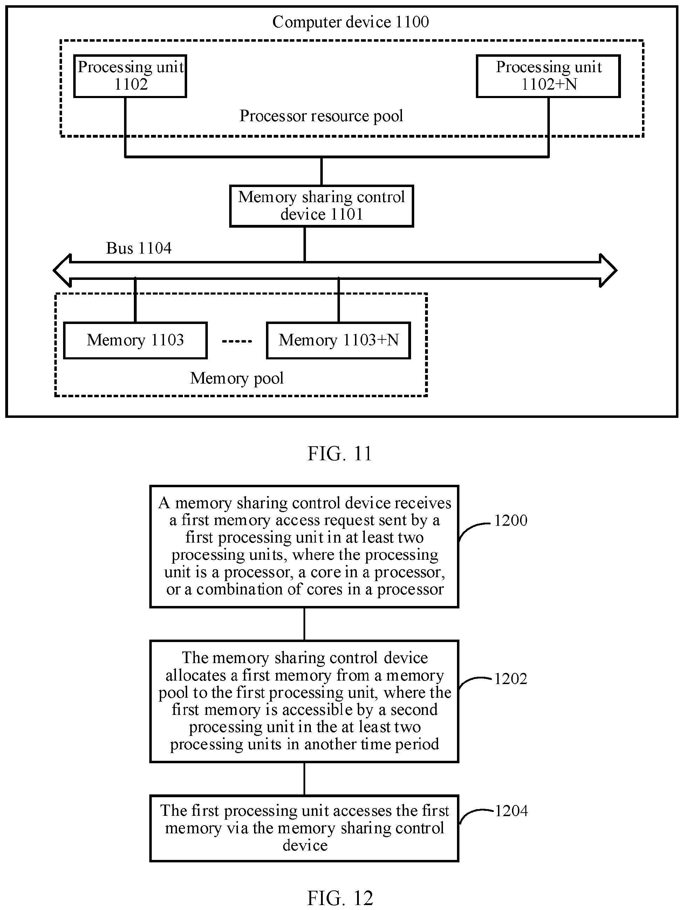

FIG. 11 is a schematic diagram of a structure of a computer device 1100 according to an embodiment of this application; and
FIG. 12 is a schematic flowchart of a memory sharing control method according to an embodiment of this application.

### DESCRIPTION OF EMBODIMENTS

The following describes embodiments of the present invention with reference to the accompanying drawings.

In the specification, claims, and accompanying drawings of this application, the terms "first", "second", and the like are intended to distinguish between similar objects but do not necessarily indicate a specific order or sequence. It should be understood that, the data termed in such a way is interchangeable in proper circumstances, so that embodiments described herein can be implemented in an order other than the order illustrated or described herein. In addition, the terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features.

In the specification and claims of this application, the terms "include", "have" and any other variants mean to cover a non-exclusive inclusion, for example, a process, method, system, product, or device that includes a series of steps or modules is not necessarily limited to those expressly listed steps or modules, but may include other steps or modules not expressly listed or inherent to such a process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved. Unit division in this application is logical division and may be other division during actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate components may or may not be physically separate, may or may not be physical units, or may be distributed into a plurality of circuit units. Some or all of the units may be selected depending on actual requirements to achieve the objectives of the solutions of this application.

It should be understood that the terms used in the descriptions of the various examples in the specification and claims of this application are merely intended to describe specific examples, but are not intended to limit the examples. The terms "one" ("a" and "an") and "the" of singular forms used in the descriptions of various examples and the appended claims are also intended to include plural forms, unless otherwise specified in the context clearly.

It should also be understood that the term "and/or" used in the specification and claims of this application indicates and includes any or all possible combinations of one or more items in associated listed items. The term "and/or" describes an association relationship between associated objects and indicates that three relationships may exist. For example, A and/or B may indicate the following three cases: Only A exists, both A and B exist, and only B exists. In addition, the character "/" in this application usually indicates an "or" relationship between associated objects.

It should be understood that determining B based on A does not mean that B is determined based only on A. B may alternatively be determined based on A and/or other information.

It should be further understood that the term "include" (also referred to as "includes", "including", "comprises", and/or "comprising") used in this specification specifies presence of stated features, integers, steps, operations, elements, and/or components, but does not preclude presence or addition of one or more other features, integers, steps, operations, elements, components, and/or groups thereof.

It should be further understood that the term "if" may be interpreted as a meaning "when" ("when" or "upon"), "in response to determining", or "in response to detecting". Similarly, according to the context, the phrase "if it is determined that" or "if (a stated condition or event) is detected" may be interpreted as a meaning of "when it is determined that", "in response to determining", "when (a stated condition or event) is detected", or "in response to detecting (a stated condition or event)".

It should be understood that "one embodiment", "an embodiment", and "a possible implementation" mentioned in the entire specification mean that particular features, structures, or characteristics related to an embodiment or the implementations are included in at least one embodiment of this application. Therefore, "in one embodiment", "in an embodiment", or "in a possible implementation" appearing throughout this specification does not necessarily mean a same embodiment. In addition, these specified features, structures, or characteristics may be combined in one or more embodiments in any proper manner.

Preferably, some terms and related technologies in this application are explained and described, to facilitate understanding.

A memory controller is an important component for controlling a memory inside a computer system and implementing data exchange between the memory and a processor, and is a bridge for communication between a central processing unit and the memory. The memory controller is mainly configured to perform a read and write operation on the memory, and may be roughly classified as a conventional memory controller and an integrated memory controller. In a conventional computer system, the memory controller is located in a northbridge chip of a main board chipset. In this structure, any data transmission between the CPU and the memory passes through a path "CPU-northbridge-memory-northbridge-CPU". When the CPU reads/writes data from the memory, multi-level data transmission is required. Therefore, long latency is caused. The integrated memory controller is located inside the CPU, and any data transmission between the CPU and the memory needs to pass through a path "CPU-memory-CPU". In comparison with the conventional memory controller, latency of the data transmission is greatly reduced.

A DRAM is a widely used memory medium. Unlike sequential access to disk media, the DRAM allows that the central processing unit may access any byte of the disk media directly and randomly. The DRAM has simple storage structure, and each storage structure mainly includes a capacitor and a transistor. When the capacitor is charged, it indicates that data " 1" is stored. A state after the capacitor discharges completely represents data "0".

A PCM is a non-volatile memory that stores information based on a phase change storage material. Each storage unit in the PCM includes a phase change material (for example, a sulfide glass) and two electrodes. The phase change material can be converted between a crystalline state and an amorphous state by changing a voltage of the electrodes and power-on time. When being in the crystalline state, the medium has low resistance. When being in the amorphous state, the medium has high resistance. Therefore, the data may be stored by changing the state of the phase change material. The most typical characteristic of the PCM is non-volatile.

A serializer/deserializer (serializer/deserializer, Serdes) converts parallel data into serial data at a transmit end, and then transmits the serial data to a receive end through a transmission line; or converts serial data into parallel data at a receive end, so that a quantity of transmission lines can be reduced, and system cost is reduced. The Serdes is a time division multiplexing (time division multiplexing, TDM) and point-to-point communication technology. To be specific, a plurality of low-speed parallel signals (namely, parallel data) at the transmit end are converted into high-speed serial signals (namely, serial data), and the high-speed serial signals are then reconverted into low-speed parallel signals at the receive end through a transmission medium. The Serdes uses differential signals for transmission, so that interference and noise loaded on the two differential transmission lines can be mutually canceled. This improves a transmission speed, and also improves signal transmission quality. A parallel interface technology refers to parallel transmission of multi-bit data, and a synchronous clock is transmitted to divide data bytes. Therefore, this manner is simple and easy to implement, but is usually used for short-range data transmission because there are a large quantity of signal lines. A serial interface technology is widely applied in long-distance data communication to transmit byte data bit by bit.

With continuous improvement of a technology level of an integrated circuit, especially continuous improvement of an architecture design of a processor, performance of the processor is gradually improved. In comparison with the processor, memory performance improvement is much slower. With an accumulated increase of a gap, a consequence of an unbalanced accumulated increase is that a memory access speed is seriously behind a computing speed of the processor, and a bottleneck formed by the memory makes it difficult to exert an advantage of a high-performance processor. For example, a memory access speed is greatly restricted to increasing high performance computing (high performance computing, HPC).

In addition, a multi-core processor gradually replaces a single-core processor, and the number of times of accessing a memory (for example, an off-chip memory, also referred to as a main memory) by parallel execution of a plurality of cores in the processor also greatly increases. This also leads to a corresponding increase in a bandwidth requirement between the processor and the memory.

An access speed and bandwidth between the processor and the memory are usually improved by sharing memory resources.

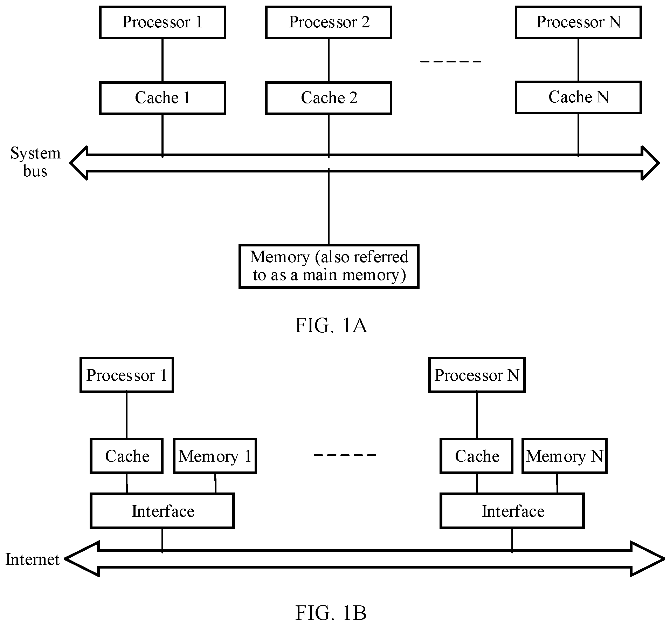

Depending on whether there is a difference in processor-to-memory access, an architecture in which a plurality of processors share a memory may be divided into a centralized memory sharing system and a distributed memory sharing system. The centralized memory sharing system has features of a small quantity of processors and a single interconnection manner, and the memory is connected to all the processors via a cross switch or a shared bus. FIG. 1A is a typical architecture of a centralized memory sharing system. Because memory access is equal or symmetric for all processors, this type of architecture is also referred to as a unified memory architecture (unified memory Architecture, UMA) or a symmetric multiprocessing (symmetric multiprocessing, SMP) architecture.

The centralized memory sharing system has a single memory system, and therefore is faced with a problem that required access memory bandwidth cannot be provided after a quantity of the processors reaches a specified scale. This becomes a bottleneck that restricts performance. The distributed memory sharing system effectively resolves this problem. FIG. 1B is a schematic diagram of a structure of a distributed memory sharing system. As shown in FIG. 1B, in the system, memories are globally shared, uniformly addressed, and distributed on processors. Address space of the memories is divided into several parts, which are respectively managed by the processors. For example, if a processor 1 needs to access memory address space managed by the processor, the processor 1 does not need to cross a processor or an interconnect bus. If the processor 1 accesses memory space managed by another processor, for example, needs to access memory address space managed by a processor N, the processor 1 needs to cross the interconnect bus. The distributed memory sharing system is also referred to as a non-uniform memory access (Non-uniform memory access, NUMA) system.

In the NUMA system, address space of a shared memory is managed by the respective processor. Due to a lack of a unified memory management mechanism, when a processor needs to use memory space managed by another processor, memory resources are not flexible enough to share, and low utilization of the memory resources exists. In addition, when the processor accesses memory address space that is not managed by the processor, long latency is usually caused because the processor crosses the interconnect bus.

Embodiments of this application provide a memory sharing control device, a chip, a computer device, a system, and a method, and provide a new memory access architecture, in which a bridge for access between a processor and a shared memory pool (which may also be briefly referred to as a memory pool in embodiments) is established via a memory sharing control device, to improve utilization of memory resources.

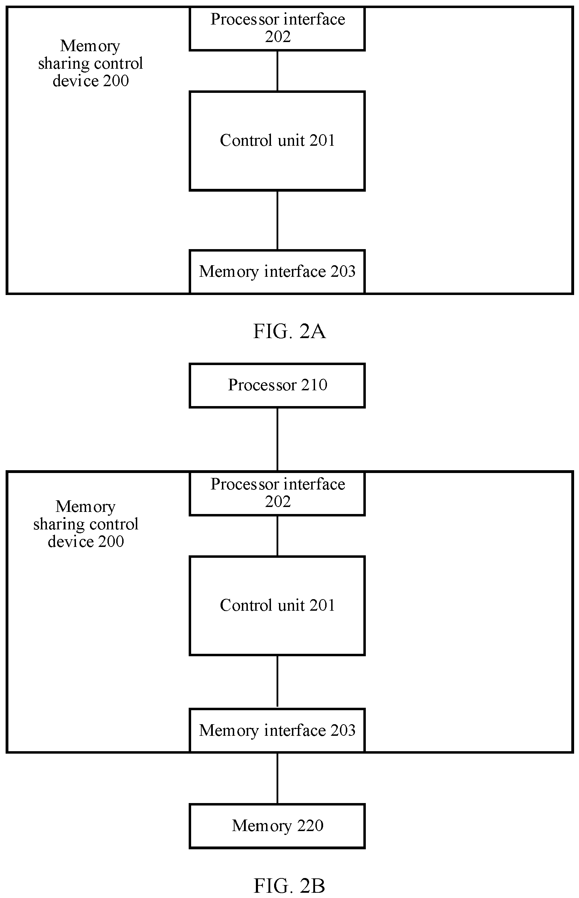

FIG. 2A is a schematic diagram of a structure of a memory sharing control device 200 according to an embodiment of this application. As shown in FIG. 2A, the memory sharing control device 200 includes: a control unit 201, a processor interface 202, and a memory interface 203.

The memory sharing control device 200 may be a chip located between a processor (a CPU or a core in a CPU) and a memory (also referred to as a main memory) in a computer device, for example, may be an FPGA chip.

FIG. 2B is a schematic diagram of a connection relationship between a memory sharing control device 200 and each of a processor and a memory. As shown in FIG. 2B, the processor 210 is connected to the memory sharing control device 200 through a processor interface 202, and the memory 220 is connected to the memory sharing control device 200 through a memory interface 203. The processor 210 may be a CPU or a CPU including a plurality of cores. The memory 220 includes but is not limited to a DRAM, a PCM, a flash memory, an SCM, an SRAM, a PROM, an EPROM, an STT-RAM, or an RRAM. The SCM is a composite storage technology that combines characteristics of a conventional storage apparatus and a memory. The storage class memory can provide a higher read/write speed than a hard disk, but provide a lower operation speed and lower cost than the DRAM. In this embodiment of this application, the memory 220 may further include a DIMM or an SSD.

The processor interface 202 is an interface through which the memory sharing control device 200 is connected to the processor 210. The interface can receive a serial signal sent by the processor, and convert the serial signal into a parallel signal. Based on the processor interface 202, the memory sharing control device 200 may be connected to the processor 210 via a serial bus. The serial bus has characteristics of high bandwidth and low latency, to ensure efficiency of data transmission between the processor 210 and the memory sharing control device 200. For example, the processor interface 202 may be a low latency-based Serdes interface. The Serdes interface serving as the processor interface 202 is connected to the processor via the serial bus, to implement conversion between the serial signal and the parallel signal based on serial-to-parallel logic. The serial bus may be a memory semantic bus. The memory semantic bus includes but is not limited to a QPI, PCIe, HCCS, or CXL protocol interconnect-based bus.

During specific implementation, the processor 210 may be connected to the serial bus through the Serdes interface, and is connected to the processor interface 202 (for example, the Serdes interface) of the memory sharing control device 200 via the serial bus. A memory access request initiated by the processor 210 is a memory access request in a parallel signal form. The memory access request in the parallel signal form is converted into a memory access request in a serial signal form through the Serdes interface in the processor 210, and the memory access request in the serial signal form is sent via the serial bus. After receiving the memory access request in the serial signal form from the processor 210 via the serial bus, the processor interface 202 converts the memory access request in the serial signal form into the memory access request in the parallel signal form, and sends the memory access request obtained through conversion to a control unit 301. The control unit 301 may access a corresponding memory based on the memory access request in the parallel signal form. For example, the corresponding memory may be accessed in a parallel manner. In this embodiment of this application, the parallel signal may be a signal that transmits a plurality of bits once, and the serial signal may be a signal that transmits one bit once.

Similarly, when the memory sharing control device 200 returns a response message of the memory access request to the processor 210, the response message in the parallel signal form is converted into a response message in the serial signal form through the processor interface 202 (for example, the Serdes interface), and the response message in the serial signal form is sent to the processor 210 via the serial bus. After receiving the response message in the serial signal form, the processor 210 converts the response message in the serial signal form into a parallel signal, and then performs subsequent processing.

The memory sharing control device 200 may access a corresponding memory in the memory 220 through the memory interface 203 used as a memory controller. For example, when the memory 220 is a shared memory pool including the DRAM, the memory interface 203 is a DDR controller having a DRAM control function, and is configured to implement interface control of a DRAM storage medium. When the memory 220 is a shared memory pool including the PCM, the memory interface 203 is a memory controller having a PCM control function, and is configured to implement interface control of a PCM storage medium.

It should be noted that one processor 210 shown in FIG. 2B is merely an example, and the processor connected to the memory sharing control device 200 may alternatively be a multi-core processor, or may be a processor resource pool. The processor resource pool includes at least two processing units, and each processing unit may be a processor, a core in a processor, or a combination of cores in a processor. The processing unit in the processor resource pool may be a combination of different cores in a same processor, or may be a combination of different cores in different processors. When the processor executes different tasks, a plurality of cores need to execute computing tasks in parallel, or the cores in different processors need to execute computing tasks in parallel. When these cores execute the computing tasks in parallel, a combination of these cores may be used as a processing unit to access a same memory in the shared memory pool.

One memory 220 shown in FIG. 2B is merely an example, and the memory 220 connected to the memory sharing control device 200 may alternatively be a shared memory pool including a plurality of memories. At least one memory in the shared memory pool is accessible by different processing units in different time periods. The memory in the shared memory pool includes but is not limited to a DRAM, a PCM, a flash memory, an STT-RAM, or an RRAM. Similarly, the memory in the shared memory pool may be a memory of one computer device, or may be memories of different computer devices. It may be understood that the computer device may be a device, such as a computer (a desktop computer or a portable computer) or a server, that requires a processor to access a memory, or may include a terminal device such as a mobile phone terminal. A form of a specific device is not limited in this embodiment of this application.

The control unit 201 is configured to control memory access based on the memory access request, including but not limited to dividing memory resources in the shared memory pool into a plurality of independent memory resources, and separately allocating (for example, allocating on demand) the plurality of independent memory resources to the processing units in the processor resource pool. The independent memory resources obtained through division by the control unit 201 may be memory storage space corresponding to a segment of physical addresses in the shared memory pool. The physical addresses of the memory resources may be consecutive or inconsecutive. For example, the memory sharing control device 200 may virtualize a plurality of virtual memory devices based on the shared memory pool, and each virtual memory device corresponds to or manages some memory resources. The control unit 201 respectively allocates, by establishing a correspondence between different virtual memory devices and the processing units, the plurality of independent memory resources obtained through division in the shared memory pool to the processing units in the processor resource pool.

However, a correspondence between the processing unit and the memory resource is not fixed. When a specific condition is met, the correspondence may be adjusted. That is, the correspondence between the processing unit and the memory resource may be dynamically adjusted. That the control unit 201 adjusts the correspondence between the processing unit and the memory resource may include: receiving a control instruction sent by a driver in an operating system, and adjusting the correspondence based on the control instruction. The control instruction includes information about deleting, modifying, or adding the correspondence.

For example, a computer device 20 (not shown in the figure) includes the processor 210, the memory sharing device 200, and the memory 220 shown in FIG. 2B. The processor 210 runs an operating system that the computer device 20 needs to run, to control the computer device 20. It is assumed that the computer device 20 is a server that provides a cloud service, and the processor 210 has eight cores. A core A provides a cloud service for a user A, and a core B provides a cloud service for a user B. Based on service requirements of the user A and the user B, the operating system of the computer device separately allocates a memory resource A in the memory 220 to the core A as a memory access resource, and allocates a memory resource B in the memory 220 to the core B as a memory access resource. The operating system may send, to the memory sharing control device 200, a control instruction for establishing a correspondence between the core A and the memory resource A and a correspondence between the core B and the memory resource B. The memory sharing control device 200 establishes the correspondence between the core A and the memory resource A and the correspondence between the core B and the memory resource B based on the control instruction of the operating system. In this way, when the core A initiates a memory access request, the memory sharing control device 200 may determine, based on information carried in the access request, a memory resource (namely, the memory resource A) that is accessible by the core A, so that the core A accesses the memory resource A. When the user A needs to rest due to reasons such as a service requirement or a time zone and does not need to use a cloud service, and a requirement for a memory resource is reduced, and when the user B needs to use more cloud services due to reasons such as a service requirement or a time zone and needs more memory resources, the operating system of the computer device 20 may send, based on changes of the service requirements of the user A and the user B, a control instruction for canceling the correspondence between the core A and the memory resource A, and allocating the memory resource A to the core B for use. The operating system may be specifically a driver in an operating system, and may send a control instruction for deleting the correspondence between the core A and the memory resource A and establishing a correspondence between the core B and the memory resource A. The memory sharing control device 200 reconfigures the correspondence between the core B and the memory resource A based on the control instruction sent by the driver in the operating system, deletes the correspondence between the core A and the memory resource A, and establishes the correspondence between the core B and the memory resource A. In this way, the memory resource A can be used as memory of the core A and the core B in different time periods, so that requirements of different cores for different services can be met, and utilization of the memory resources is improved.

The driver in the operating system may send the control instruction to the memory sharing control device 200 over a dedicated or specified channel. Specifically, when the processor that runs the operating system is in a privilege (privilege) mode, the driver in the operating system can send the control instruction to the memory sharing control device 200 over the dedicated or specified channel. In this way, the driver in the operating system may send, over the dedicated channel, a control instruction for deleting, changing, or adding the correspondence.

The memory sharing control device 200 may be connected to the processor 210 through an interface (for example, the Serdes interface) that supports serial-to-parallel. The processor 210 can communicate with the memory sharing control device 200 via the serial bus. Based on the characteristics of the high bandwidth and the low latency of the serial bus, even if a communication distance between the processor 210 and the memory sharing control device 200 is relatively large, an access rate of accessing the shared memory pool by the processor 210 can also be ensured.

In addition, the control unit 201 may be further configured to implement data buffering control, data compression control, data priority control, or the like. Therefore, efficiency and quality of accessing the memory by the processor are further improved.

The following describes, by using an example in which an FPGA is used as a chip for implementing the memory sharing control device 200, an example of an implementation of the memory sharing control device 200 provided in this embodiment of this application.

As a programmable logic device, the FPGA may be classified into three types according to different principles of programmability: a static random access memory (static random access memory, SRAM)-based SRAM-type FPGA, an anti-fuse-type FPGA, and a flash-type FPGA. Due to eraseability and volatility of the SRAM, the SRAM-type FPGA can be programmed repeatedly, but configuration data is lost due to a power failure. The anti-fuse-type FPGA can be programmed only once. After the programming, a circuit function is fixed and cannot be modified again. Therefore, the circuit function does not change even if no power is supplied.

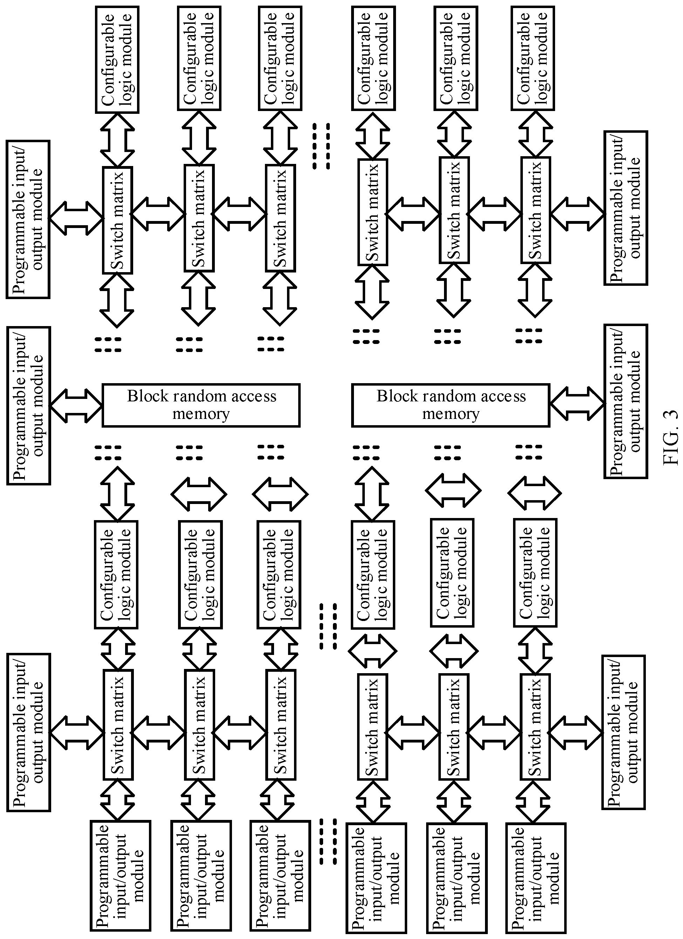

The following uses the SRAM-type FPGA as an example to describe an internal structure of the FPGA. FIG. 3 is a schematic diagram of an internal structure of the SRAM-type FPGA. As shown in FIG. 3, the FAGA includes at least the following parts inside.

A configurable logic block (configurable logic block, CLB) mainly includes programmable resources inside such as a lookup table (lookup table, LUT), a multiplexer, a carry chain, and a D trigger, is configured to implement different logic functions, and is a core of an entire FPGA chip.

A programmable input/output block (IOB) provides an interface between the FPGA and an external circuit, and when internal and external electrical characteristics of the FPGA are different, provides a proper drive for an input/output signal to implement matching. Electronic design automation (electronic design automation, EDA) software is configured to configure different electrical standards and physical information as required, for example, to adjust a value of a drive current and to change resistances of a pull-up resistor and a pull-down resistor. Usually, several IOBs are grouped into a bank (bank). FPGA chips of different series have a different quantity of IOBs included in each group.

A block random access memory (block random access memory, BRAM) is configured to store data with a large amount of data. To meet different data read/write requirements, the BRAM may be configured as a common storage structure such as a single-port RAM, a dual-port RAM, a content addressable memory (content addressable memory, CAM), and a first in first out (first in first out, FIFO) cache queue, and a storage bit width and depth can be changed based on design requirements. The BRAM can extend an application scope of the FPGA and improve flexibility of the FPGA.

A switch matrix (switch matrix, SM) is an important part of an interconnection resource (interconnect resource, IR) inside the FPGA, and is mainly distributed at a left end of each resource module, where switch matrices at left ends of different modules are very similar but also different, and are configured to connect module resources. Another part of the interconnection resource inside the FPGA is a wire segment (Wire Segment). The wire segment and the SM are used together to connect entire chip resources.

FIG. 3 merely shows several main components related to implementation of the memory sharing control device 200 in this embodiment of this application in the FPGA chip. During specific implementation, in addition to the components shown in FIG. 3, the FPGA may further include another component or an embedded functional unit, for example, may further include a digital signal processor (digital signal processor, DSP), a phase locked loop (phase locked loop, PLL), or a multiplier (Multiplier, MUL).

The control unit 201 in FIG. 2A or FIG. 2B may be implemented by using the CLB in FIG. 3. To be specific, a shared memory pool connected to a memory sharing control device 200 is controlled by using the CLB. For example, memory resources in the shared memory pool are divided into a plurality of blocks, and one or more memory resources are allocated to one processing unit. Alternatively, a plurality of virtual memory devices are virtualized based on the memory resources in the shared memory pool, each virtual memory device corresponds to physical address space in a segment of the shared memory pool, and one or more virtual memory devices are allocated to one processing unit, so that a correspondence table between the allocated virtual memory device and the corresponding processing unit is established, and so on.

The processor interface 202 in FIG. 2A or FIG. 2B may be implemented by using the IOB in FIG. 3. To be specific, an interface having a serial-to-parallel function may be implemented by using the IOB, for example, a Serdes interface is implemented by using the IOB.

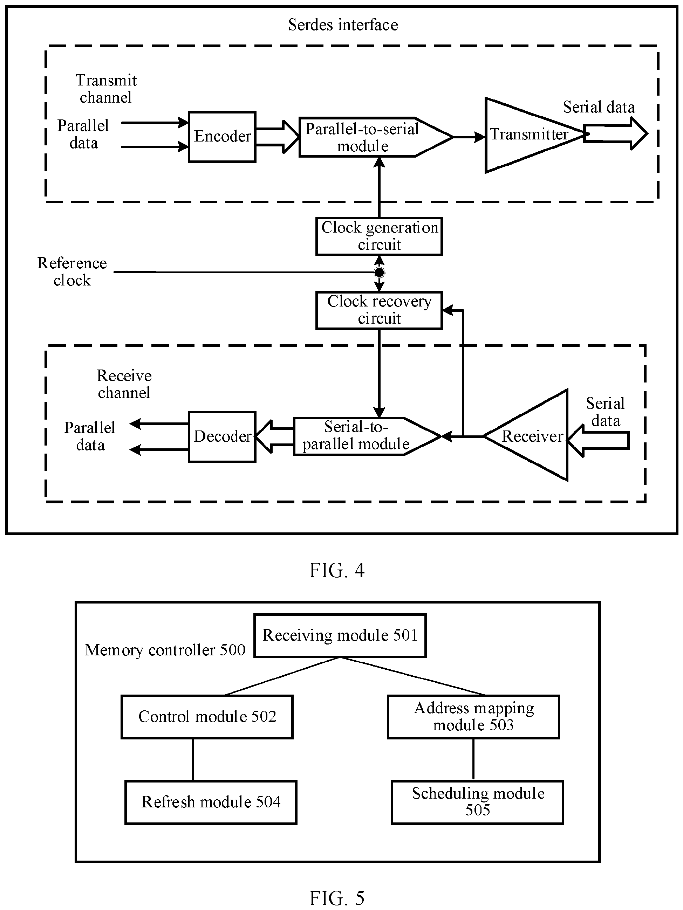

FIG. 4 is a schematic diagram of a specific structure of a Serdes interface. As shown in FIG. 4, the Serdes interface mainly includes a transmit channel and a receive channel. In the transmit channel, an encoder encodes input parallel data, a parallel-to-serial module then converts the encoded input parallel data into a serial signal, and a transmitter (Tx) next drives to output the serial data. In the receive channel, a receiver and a clock recovery circuit recover a sampling clock and data, a serial-to-parallel module then finds a byte boundary and converts the byte boundary into parallel data, and a decoder finally completes recovery of original parallel data.

The encoder and the decoder complete functions of encoding and decoding data, to ensure direct current balance of serial data streams and as many data jumps as possible. For example, an 8b/10b and irregular scrambling/descrambling (Scrambling/Descrambling) encoding/decoding solution may be used. The parallel-to-serial module and the serial-to-parallel module are configured to complete conversion of data between a parallel form and a serial form. A clock generation circuit generates a conversion clock for a parallel-to-serial circuit, which is usually implemented by a phase locked loop. The clock generation circuit and the clock recovery circuit provide a conversion control signal for a serial-to-parallel circuit, which is usually implemented by the phase locked loop, but may alternatively be implemented by a phase interpolator or the like.

The foregoing merely describes an example of an implementation of the Serdes interface. That is, the Serdes interface shown in FIG. 4 may be implemented based on the IOB in FIG. 3. Certainly, a function of the Serdes interface may alternatively be implemented based on another hardware component, for example, another dedicated hardware component in an FPGA. A specific implementation form of the Serdes interface is not limited in this embodiment of this application.

The memory interface 203 in FIG. 2A or FIG. 2B may be implemented based on the IOB or another dedicated circuit. For example, when the memory interface 203 is implemented by using a DDR controller, a logical structure of the DDR controller may be shown in FIG. 5.

FIG. 5 is a schematic diagram of an internal structure of a memory controller 500. Refer to FIG. 5. The memory controller 500 includes:
a receiving module 501, configured to record information about an access request, where an access request mainly includes a request type and a request address. It can be learned from the two pieces of information that a specific operation is to be performed on a specific memory address based on the access request. The information about the access request recorded by the receiving module 501 may include the request type and the request address. In addition, the information recorded by the receiving module 501 may further include some auxiliary information for estimating system performance, for example, arrival time and completion time of the access request.

A control module 502 is configured to control initialization, power-off, and the like on a memory. In addition, the control module 502 may further control a depth of a memory queue used to control memory access, determine whether the memory queue is empty or full, determine whether a memory request is completed, determine an arbitration solution to be used, determine a scheduling manner to be used, and the like.

An address mapping module 503 is configured to implement conversion between an address of the access request and an address that is identifiable by the memory. For example, a memory address of a DDR4 memory system includes six parts: Channel, Rank, Bankgroup, Bank, Row, and Column. Different address mapping manners have different access efficiency.

A refresh module 504 is configured to implement scheduled refresh on the memory. The DRAM includes many repeated cells (cells), and each cell includes a transistor (Mosfet) and a capacitor. The capacitor is configured to: store a charge and determine whether a logical state of a DRAM unit is 1 or 0. However, because a capacitor is subject to electricity leakage, a charge is lost at intervals, and consequently data is lost. Therefore, the refresh module 504 needs to perform scheduled refresh.

A scheduling module 505 is configured to separately schedule access requests to different queues based on the access requests sent by the address mapping module 503 and request types. For example, the scheduling module may schedule an access request to a queue with a high priority, and select a request with a highest priority from a queue with a highest priority according to a preset scheduling policy, to complete one time of scheduling, where the queue is a memory access control queue; and the scheduling policy may be determined based on a time sequence of arrival of the requests, and earlier arrival time indicates a higher priority; or the scheduling policy may be determined based on a request that is prepared first.

It should be noted that FIG. 5 merely shows some components or functional modules of the memory controller 500. During specific implementation, the memory controller 500 may further include other components or functional modules. For example, the memory controller 500 may further include a Villa engine used for multi-thread computing, a direct memory access (direct memory access, DMA) module for direct memory access, or the like. Details are not described one by one.

The foregoing describes an implementation of the memory sharing control device 200 by using the FPGA as an example. During specific implementation, the memory sharing control device 200 may alternatively be implemented by using another chip or another device that can implement a similar chip function. For example, the memory sharing control device 200 may alternatively be implemented by using an ASIC. Circuit functions of the ASIC have been defined at the beginning of design, and the ASIC is featured in high chip integration, being easy to implement mass tapeouts, low cost of a single tapeout, a small size, and the like. A specific hardware implementation of the memory sharing control device 200 is not limited in this embodiment of this application.

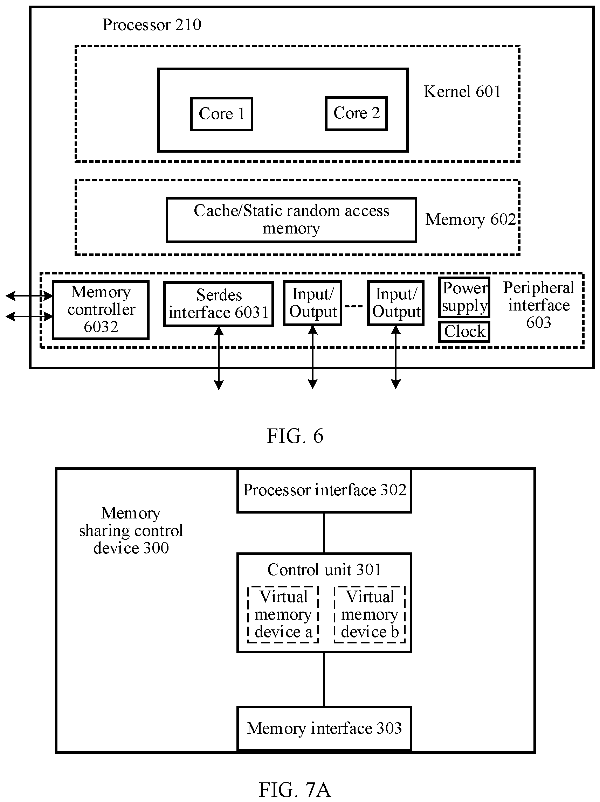

In this embodiment of this application, a processor connected to the memory sharing control device 200 may be any processor that implements a processor function. FIG. 6 is a schematic diagram of a structure of a processor 210 according to an embodiment of this application. As shown in FIG. 6, the processor 210 includes a kernel 601, a memory 602, a peripheral interface 603, and the like. The kernel 601 may include at least one core, and is configured to implement a function of the processor 600. In FIG. 6, two cores (a core 1 and a core 2) are used as an example for description. However, a quantity of cores in the processor 600 is not limited. The processor 600 may further include four, eight, or 16 cores. The memory 602 includes a cache or an SRAM, and is configured to cache read/write data of the core 1 or the core 2. The peripheral interface 603 includes a Serdes interface 6031, a memory controller 6032, an input/output interface, a power supply, a clock, and the like. The Serdes interface 6031 is an interface for connecting the processor 210 and a serial bus. After a memory access request in a parallel signal form initiated by the processor 210 is converted into a serial signal through the Serdes interface 6031, the serial signal is sent to the memory sharing control device 200 via the serial bus. The memory controller 6032 may be a memory controller with a function similar to that of the memory controller shown in FIG. 5. When the processor 210 has a local memory controlled by the processor 210, the processor 210 may implement access control on the local memory via the memory controller 6031.

It may be understood that FIG. 6 is merely an example of a schematic diagram of a structure of an implementation of the processor. A specific structure or form of the processor connected to the memory sharing control device 200 is not limited in this embodiment of this application, provided that any processor that can implement a specific computing or control function falls within the scope disclosed in this embodiment of this application.

The following further describes a specific implementation of the memory sharing control device provided in this embodiment of this application.

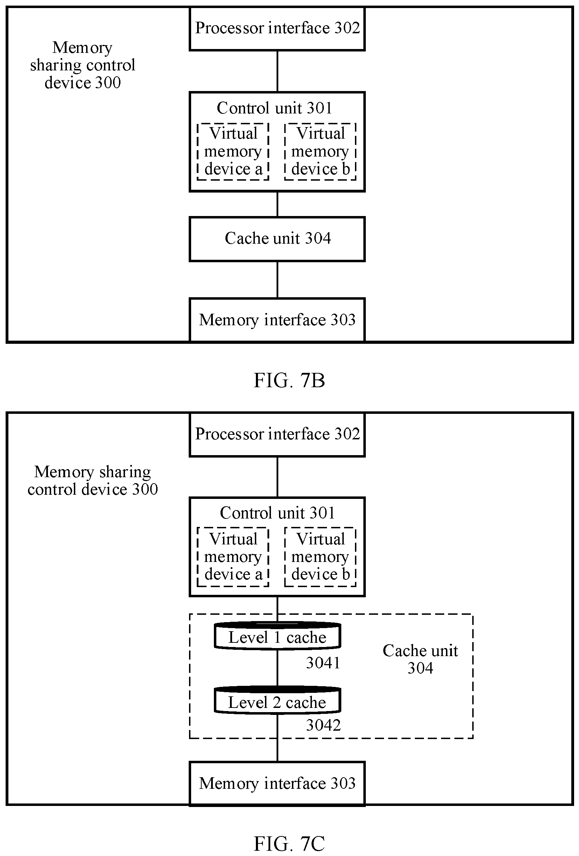

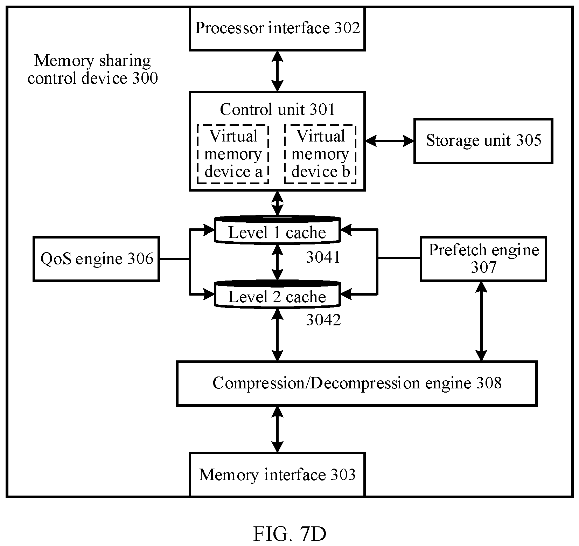

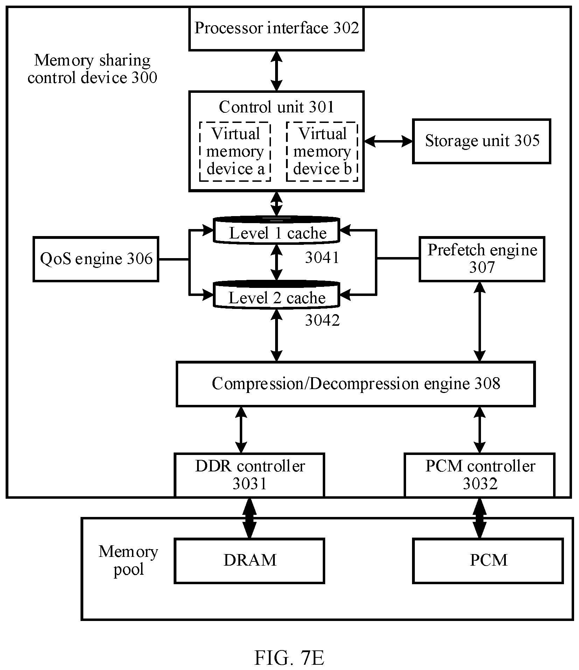

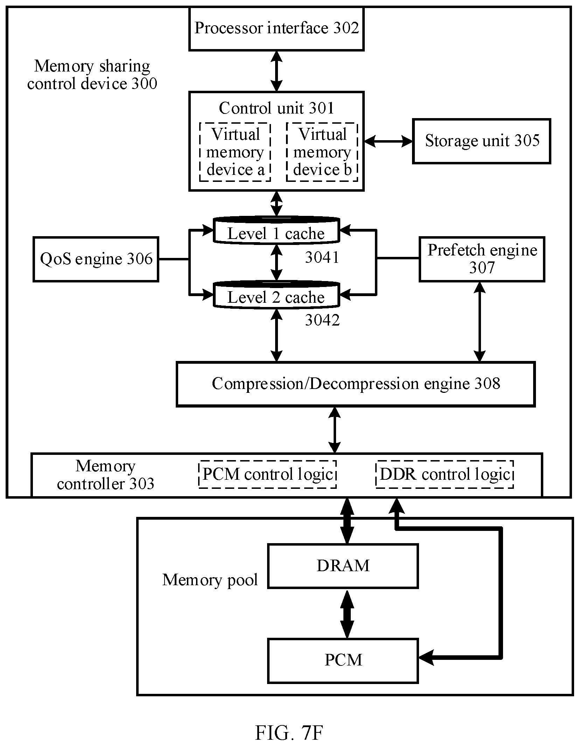

FIG. 7A is a schematic diagram of a structure of a memory sharing control device 300 according to an embodiment of this application. As shown in FIG. 7A, the memory sharing control device 300 includes: a control unit 301, a processor interface 302, and a memory interface 303. For a specific implementation of the memory sharing control device 300 shown in FIG. 7, refer to the implementations of the memory sharing control device 200 in FIG. 2A or FIG. 2B, or refer to the implementation of the FPGA shown in FIG. 3. Specifically, the control unit 301 may be implemented with reference to the implementation of the control unit 201 in FIG. 2A or FIG. 2B, and may be implemented by using the CLB shown in FIG. 3. The processor interface 302 may be implemented with reference to the Serdes interface shown in FIG. 4, and the memory interface 303 may be implemented with reference to the memory controller shown in FIG. 5. Details are not described again.

Specifically, the control unit 301 in FIG. 7A may implement the following functions through configuration.
1. Virtualize a plurality of virtual memory devices based on memory resources connected to the memory sharing control device 300.

The memory resources connected to the memory sharing control device 300 form a shared memory pool. The control unit 301 may perform unified addressing on the memory resources in the shared memory pool, and divide memory physical address space after the unified addressing into several address segments, where each address segment corresponds to one virtual memory device. Address space sizes corresponding to the address segments obtained through division may be the same or different. In other words, sizes of the virtual memory devices may be the same or different.

The virtual memory device is not a device that actually exists, but is a segment of memory address space that is in the shared memory pool and that the control unit 301 is configured to identify. The segment of address space is allocated to a processing unit (which may be a processor, a core in a processor, a combination of different cores in a same processor, or a combination of cores in different processors) for memory access (for example, data read/write), and therefore is referred to as the virtual memory device. For example, each virtual memory device corresponds to a segment of memory areas with consecutive physical addresses. Optionally, one virtual memory device may alternatively correspond to inconsecutive physical address space.

The control unit 301 may allocate one identifier to each virtual memory device, to identify different virtual memory devices. FIG. 7A shows an example of two virtual memory devices: a virtual memory device a and a virtual memory device b. The virtual memory device a and the virtual memory device b respectively correspond to different memory address space in the shared memory pool. 2. Allocate the plurality of virtualized virtual memory devices to a processing unit connected to the memory sharing control device 300.

The control unit 301 may allocate a virtual memory device to a processing unit. To avoid possible complex logic or possible traffic storm, when allocating a virtual memory device, the control unit 301 avoids allocating one virtual memory device to a plurality of processors, or avoids allocating one virtual memory device to a plurality of cores in one processor. However, for some services, when different cores in the same processor need to execute computing tasks in parallel, or different cores in different processors need to execute computing tasks in parallel, a memory corresponding to a virtual memory device is allocated to a combination of cores through complex logic, so that service processing efficiency during parallel computing can be improved.

A manner in which the control unit 301 allocates the virtual memory device may be establishing a correspondence between the identifier of the virtual memory device and an identifier of the processing unit. For example, the control unit 301 establishes a correspondence between the virtual memory devices and different processing units based on a quantity of processing units connected to the memory sharing control device 300. Optionally, the control unit 301 may alternatively establish a correspondence between the processing units and the virtual memory devices, and establish a correspondence between the virtual memory devices and different memory resources, to establish a correspondence between the processing units and different memory resources.

3. Record a correspondence between the virtual memory devices and the allocated processing units.

During specific implementation, the control unit 301 may maintain an access control table (also referred to as a mapping table), used to record the correspondence between the virtual memory devices and the processing units. An implementation of the access control table may be shown in Table 1.

**Table 1**

| Device_ID | Address | Size | Access Attribute | Resource_ID |
|---|---|---|---|---|
| 1 | xxx | xxx | R or W | xxx |
| 2 | xxx | xxx | R or W | xxx |

In Table 1, Device_ID represents an identifier of a virtual memory device, Address represents a start address of a physical memory address that is managed or is accessible by the virtual memory device, Size represents a size of a memory that is managed or is accessible by the virtual memory device, and Access Attribute represents an access manner, to be specific, a read operation or a write operation. Resource_ID represents an identifier of a processing unit.

In Table 1, Resource_ID usually corresponds to one processing unit. Because a processing unit may be a processor, a core in a processor, a combination of a plurality of cores in a processor, or a combination of a plurality of cores in different processors, the control unit 301 may further maintain a correspondence table between Resource_ID and the combination of cores, to determine information about the cores or a processor corresponding to each processing unit. For example, Table 2 shows an example of the correspondence between Resource_ID and the cores.

**Table 2**

| Resource_ID | Processor or core (core) ID |
|---|---|
| 001 | 0100 |
| | 0200 |
| | 0300 |
| 002 | Processor ID |

In a computer device, cores in different processors have a unified identifier. Therefore, cores IDs in Table 2 can be used to distinguish between different cores in different processors. It may be understood that Table 2 merely shows an example of the correspondence between Resource_ID of the processing unit and the corresponding cores or the corresponding processor. A manner in which the memory sharing control device 300 determines the correspondence between Resource_ID and the corresponding cores or the corresponding processor is not limited in this embodiment of this application.

In another implementation, if a memory connected to the memory sharing control device 300 includes a DRAM and a PCM, due to a non-persistent characteristic of a DRAM storage medium and a persistent characteristic of a PCM storage medium, the access control table maintained by the control unit 301 may further include whether each virtual memory device is a persistent virtual memory device or a non-persistent virtual memory device.

Table 3 shows an implementation of another access control table according to an embodiment of this application.

**Table 3**

| Device_ID | Address | Size | Access Attribute | Persistent Attribute | Resource_ID |
|---|---|---|---|---|---|
| 1 | xxx | xxx | R or W | P or NP | xxx |
| 2 | xxx | xxx | R or W | P or NP | xxx |

In Table 3, Persistent Attribute represents a persistent attribute of a virtual memory device, in other words, represents whether memory address space corresponding to the virtual memory device is persistent or non-persistent.

Optionally, the access control table maintained by the control unit 301 may further include other information for further memory access control. For example, the access control table may further include permission information of accessing the virtual memory device by the processing unit, where the permission information includes but is not limited to read-only access or write-only access.

4. When a memory access request sent by a processing unit is received, determine, based on a correspondence that is between virtual memory devices and processing units and that is recorded in the access control table, a virtual memory device corresponding to the processing unit that sends the memory access request, and access a corresponding memory based on the determined virtual memory device.

For example, a memory access request includes information such as RESOURCE ID, address information, and an access attribute that are of a processing unit. RESOURCE_ID is an ID of a combination of cores, the address information is address information of a memory to be accessed, and the access attribute indicates whether the memory access request is a read request or a write request. The control unit 301 may query an access control table (for example, Table 1) based on RESOURCE ID, to determine at least one virtual memory device corresponding to RESOURCE_ID. For example, the determined virtual memory device is the virtual memory device a shown in FIG. 7A, and it can be determined from Table 2 that all the cores corresponding to RESOURCE_ID can access a memory resource that can be managed and is accessible by the virtual memory device a. The control unit 301 then controls, with reference to the address information and the access attribute in the access request, the memory access request to implement access control of the memory in the memory address space that can be managed or is accessible by the virtual memory device a. Optionally, when the access control table records the permission information, the control unit 301 may further control access of the corresponding processing unit to the memory based on the permission information recorded in the access control table.

It should be noted that, access control performed by the control unit 301 on the virtual memory device is access control implemented on the memory for a physical address space of a memory resource corresponding to the virtual memory device.

5. Dynamically adjust the correspondence between the virtual memory device and the processing unit.

The control unit 301 may dynamically adjust a virtual memory device by changing the correspondence between the processing units and the virtual memory devices in the access control table based on a preset condition (for example, different processing units has different requirements for memory resources). For example, the control unit 301 deletes a correspondence between a virtual memory device and a processing unit, in other words, releases a memory resource corresponding to the virtual memory device, and the released memory resource may be allocated to another processing unit for memory access. Specifically, this may be implemented with reference to a manner in which the control unit 201 dynamically adjusts the correspondence to delete, modify, or add the correspondence in FIG. 2B.

In an optional implementation, modulation of a correspondence between the processing units and the memory resources in the shared memory pool may alternatively be implemented by changing a memory resource corresponding to each virtual memory device. For example, when a service processed by a processing unit is in a dormant state and there is no need to occupy too much memory, a memory resource managed by a virtual memory device corresponding to the processing unit may be allocated to a virtual memory device corresponding to another processing unit, so that the same memory resource is accessed by different processing units in different time periods.

For example, when the memory sharing control device 300 is implemented by using the FPGA chip shown in FIG. 3, the function of the control unit 301 may be implemented by configuring the CLB in FIG. 3.

It should be noted that the control unit 301 may virtualize the plurality of virtual memory devices, allocate the plurality of virtualized virtual memory devices to the processing units connected to the memory sharing control device 300, and dynamically adjust the correspondence between the virtual memory devices and the processing units. This may be implemented based on a received control instruction sent by a driver in an operating system over a dedicated channel. In other words, the driver in the operating system of the computer device in which the memory sharing control device 300 is located sends, to the memory sharing control device 300 over the dedicated channel, an instruction for virtualizing the plurality of virtual memory devices, allocating the virtual memory devices to the processing units, and dynamically adjusting the correspondence between the virtual memory devices and the processing units, and the control unit 301 implements the corresponding functions based on the received control instruction.

The memory sharing control device 300 is connected to the processor via a serial bus through a serial-to-parallel interface (for example, the Serdes interface), so that long-distance transmission between the memory sharing control device 300 and the processor can be implemented while a speed of accessing the memory by the processor is ensured. Therefore, the processor can quickly access the memory resources in the shared memory pool. Because the memory resources in the shared memory pool can be allocated to different processing units in different time periods for memory access, utilization of the memory resources is improved.

For example, the control unit 301 in the memory sharing control device 300 can dynamically adjust a correspondence between virtual memory devices and a processing unit, and when a processing unit requires more memory space, adjust unoccupied virtual memory devices or virtual memory devices that have been allocated to other processing units but are temporarily idle to the processing unit that requires more memory, that is, establish a correspondence between these idle virtual memory devices and the processing unit that requires more memory. In this way, an existing memory resource can be effectively utilized to meet different service requirements of the processing unit. This not only ensures requirements of the processing unit for memory space in different service scenarios, but also improves the utilization of the memory resource.

FIG. 7B is a schematic diagram of a structure of another memory sharing control device 300 according to an embodiment of this application. Based on FIG. 7A, the memory sharing control device 300 shown in FIG. 7B further includes a cache unit 304.

The cache unit 304 may be a random access memory (random access memory, RAM), and is configured to cache data that needs to be accessed by a processing unit during memory access. For example, data that needs to be read by the processing unit is read from a shared memory pool in advance and is cached in the cache unit 304, so that the processing unit quickly accesses the data, and a rate of reading the data by the processing unit can be further improved. The cache unit 304 may alternatively cache data evicted by the processing unit, for example, Cacheline data evicted by the processing unit. A speed of accessing memory data by the processing unit can be further improved by using the cache unit 304.

In an optional implementation, the cache unit 304 may include a level 1 cache and a level 2 cache. As shown in FIG. 7C, the cache unit 304 in the memory sharing control device 300 further includes a level 1 cache 3041 and a level 2 cache 3042.

The level 1 cache 3041 may be a cache with a small capacity (for example, a capacity at a 100 MB level); or may be a nanosecond-level SRAM medium, and caches the Cacheline data evicted from the processing unit.

The level 2 cache 3042 may be a cache with a large capacity (for example, a capacity at a 1 GB level), and may be a DRAM medium. The level 2 cache 3042 may cache, at a granularity of 4 KB per page, the Cacheline data evicted from the level 1 cache and data prefetched from a memory 220 (for example, a DDR or a PCM medium). The Cacheline data is data in a cache. For example, a cache in the cache unit 304 includes three parts: a significant bit, a flag bit, and a data bit, each row includes this three types of data, and one row of data forms one Cacheline. When initiating a memory access request, the processing unit matches data in the memory access request with a corresponding bit in the cache, to read Cacheline data in the cache or write data into the cache.

For example, when the memory sharing control device 300 is implemented by using the FPGA chip shown in FIG. 3, the function of the cache unit 304 may be implemented by configuring the BRAM in FIG. 3, or the functions of the level 1 cache 3041 and the level 2 cache 3042 may be implemented by configuring the BRAM in FIG. 3.

The cache unit 304 further includes the level 1 cache 3041 and the level 2 cache 3042, so that while a data access speed of the processing unit can be improved by using the caches, cache space can be increased, a range in which the processing unit quickly accesses the memory by using the caches is expanded, and a memory access rate of the processor resource pool is further improved generally.

FIG. 7D is a schematic diagram of a structure of another memory sharing control device 300 according to an embodiment of this application. As shown in FIG. 7D, the memory sharing control device 300 further includes a storage unit 305. The storage unit 305 may be a volatile memory (volatile memory), for example, a RAM; or may include a non-volatile memory (non-volatile memory), for example, a read-only memory (read-only memory, ROM) or a flash memory. The storage unit 305 stores a program or an instruction that can be read by a control unit 301, for example, program code including at least one process or program code including at least one thread. The control unit 301 executes the program code in the storage unit 202, to implement corresponding control.

The program code stored in the storage unit 305 may include at least one of a QoS engine 306, a prefetch engine 307, and a compression/decompression engine 308. FIG. 7D is merely used to conveniently display functions related to the QoS engine 306, the prefetch engine 307, and the compression/decompression engine 308. These engines are displayed outside the control unit 301 and the storage unit 305, but it does not mean that these engines are located outside the control unit 301 and the storage unit 305. During specific implementation, the control unit 301 executes the corresponding code stored in the storage unit 305, to implement the corresponding functions of these engines.

The QoS engine 306 is configured to control, based on RESOURCE_ID in a memory access request, a storage area of data to be accessed by the processing unit in the cache unit 304 (the level 1 cache 3041 or the level 2 cache 3042), so that memory data accessed by different processing units has different cache capabilities in the cache unit 304. For example, a memory access request initiated by a processing unit with a high priority has exclusive cache space in the cache unit 304. In this way, it can be ensured that the data accessed by the processing unit can be cached in time, so that service processing quality of this type of processing unit is ensured.

The prefetch engine 307 is configured to: prefetch memory data based on a specific algorithm, and prefetch data to be read by the processing unit. Different prefetch manners affect prefetch precision and memory access efficiency. The prefetch engine 307 implements prefetching with higher precision based on the specified algorithm, to further improve a hit rate when the processing unit accesses the memory data. For example, the prefetching implemented by the prefetch engine 307 includes but is not limited to prefetching Cacheline from the level 2 cache to the level 1 cache, or prefetching data from an external DRAM or PCM to the cache.

The compression/decompression engine 308 is configured to: compress or decompress memory access data, for example, compress, by using a compression ratio algorithm and at a granularity of 4 KB per page, data written by the processing unit into a memory, and then write the compressed data into the memory; or decompress data to be read when the processing unit reads compressed data in the memory, and then send the decompressed data to the processing unit. Optionally, the compression/decompression engine may be disabled. In this way, the compression/decompression engine 308 is disabled, and does not perform compression or decompression when the processing unit accesses the data in the memory.

The QoS engine 306, the prefetch engine 307, and the compression/decompression engine 308 described above are stored in the storage unit 305 as software modules, and the control unit 301 reads the corresponding code in the storage unit to implement the corresponding functions. In an optional implementation, at least one of the QoS engine 306, the prefetch engine 307, and the compression/decompression engine 308 may alternatively be directly configured in the control unit 301, and this function is implemented through control logic of the control unit 301. In this way, the control unit 301 may execute the related control logic to implement the related functions, and does not need to read the code in the storage unit 305. For example, when the memory sharing control device 300 is implemented by using the FPGA chip shown in FIG. 3, the related functions of the QoS engine 306, the prefetch engine 307, and the compression/decompression engine 308 may be implemented by configuring the CLB in FIG. 3.

It may be understood that some of the QoS engine 306, the prefetch engine 307, and the compression/decompression engine 308 may be directly implemented by using the control unit 301; and a part is stored in the storage unit 305, and the control unit 301 reads software code in the storage unit 305 to execute the corresponding function. For example, the QoS engine 306 and the prefetch engine 307 are directly implemented through the control logic of the control unit 301. The compression/decompression engine 308 is software code stored in the storage unit 305, and the control unit 301 reads the software code of the compression/decompression engine 308 in the storage unit 305, to implement the function of the compression/decompression engine 308.

For example, when the memory sharing control device 300 is implemented by using the FPGA chip shown in FIG. 3, the function of the storage unit 305 may be implemented by configuring the BRAM in FIG. 3.

An example in which memory resources connected to the memory sharing control device 300 include a DRAM and a PCM is used below to describe an example of implementations of memory access performed by the memory sharing control device 300.

FIG. 7E and FIG. 7F respectively show two implementations in which the DRAM and the PCM are used as storage media of a shared memory pool. In an implementation shown in FIG. 7E, the DRAM and the PCM are different types of memories included in the shared memory pool, and have no hierarchical levels. When data is stored in the shared memory pool shown in FIG. 7E, a type of memory is not distinguished. In addition, in FIG. 7E, a DDR controller 3031 controls a DRAM storage medium, and a PCM controller 3032 controls a PCM storage medium. The control unit 301 may access the DRAM via the DDR controller 3031, and access the PCM via the PCM controller 3032. However, in an implementation shown in FIG. 7F, because the DRAM has a faster speed and higher performance than the PCM, the DRAM may be used as a first-level memory, and data with a high access frequency may be preferentially stored in the DRAM. The PCM is used as a second-level memory, and is configured to store less frequently-accessed data or data that is evicted from the DRAM. In FIG. 7F, a memory controller 303 includes two parts: PCM control logic and DDR control logic. After receiving a memory access request, the control unit 301 accesses the PCM storage medium through the PCM control logic. Based on a preset algorithm or policy, when data is predicted to be accessed, the data may be cached in the DRAM in advance. In this way, a subsequent access request received by the control unit 301 may hit corresponding data from the DRAM through the DDR control logic, so that memory access efficiency is further improved.

In an optional implementation, in a horizontal architecture shown in FIG. 7E, the DRAM and the PCM correspond to different memory space. For the architecture, the control unit 301 may store frequently-accessed hot data in the DRAM, in other words, establish a correspondence between a processing unit that initiates to access the frequently-accessed hot data and a virtual memory device corresponding to the memory of the DRAM. In this way, a read/write speed of the memory data and a service life of a main memory system can be improved. The control unit 301 may establish a correspondence between a processing unit that initiates to access less frequently-accessed cold data and a virtual memory device corresponding to the memory of the PCM, to store the less frequently-accessed cold data in the PCM. In this way, security of important data can be ensured based on the non-volatile feature of the PCM. In a vertical architecture shown in FIG. 7F, features of high integration of the PCM and low read/write latency of the DRAM are used. A PCM-based main memory with a larger capacity may be configured to mainly store various types of data, to reduce the number of disk access times. In addition, the DRAM is used as a cache, to further improve memory access efficiency and performance.

It should be noted that, although the cache (the level 1 cache 3041 or the level 2 cache 3042), the QoS engine 306, the prefetch engine 307, and the compression/decompression engine 308 are included in FIG. 7E or FIG. 7F, these components are all optional during implementation. That is, FIG. 7E or FIG. 7F, alternatively, these components may not be included, or at least one of these components may be included.

Based on features of different architectures in FIG. 7E and FIG. 7F, the control unit 301 in the memory sharing control device 300 may create virtual memory devices with different characteristics under different architectures, and allocate the virtual memory devices to processing units with different service requirements, so that a requirement of accessing the memory resources by the processing units can be more flexibly met, and memory access efficiency of the processing unit is further improved.

FIG. 8A-1 is a schematic diagram of a structure of a computer device 80a according to an embodiment of this application. As shown in FIG. 8A-1, the computer device 80a includes a plurality of processors (a processor 810a to a processor 810a+N), a memory sharing control device 800a, a shared memory pool including N memories 820a, and a bus 840a. The memory sharing control device 800a is separately connected to the processors (the processor 810a to the processor 810a+N) via the bus 840a, and the shared memory pool (the memory 820a to a memory 820a+N) is connected to the bus 840a. In this embodiment of this application, N is a positive integer greater than or equal to 1.

In FIG. 8A-1, each processor 810a has an own local memory. For example, the processor 810a has a local memory 1. Each processor 810a may access a local memory, and when a to-be-accessed memory resource needs to be expanded, may access the shared memory pool via the memory sharing control device 800a. The unified shared memory pool is shared by any processor in the processor 810a to the processor 810a+N to use, so that not only utilization of memory resources can be improved, but also excessively long latency caused by cross-processor access when the processor 810a accesses a local memory controlled by another processor can be avoided.

Optionally, the memory sharing control device 800a in FIG. 8A-1 may alternatively include a logical function of a network adapter, so that the memory sharing control device 800a can further access a memory resource of another computer device through a network. This can further expand a range of the shared memory resources, and improve the utilization of the memory resources.

FIG. 8A-2 is a schematic diagram of a structure of another computer device 80a according to an embodiment of this application. As shown in FIG. 8A-2, the computer device 80a further includes a network adapter 830a, and the network adapter 830a is connected to a bus 840a through a Serdes interface. The memory sharing control device 800a may access memory resources of another computer device via the network adapter 830a. In the computer device 80a shown in FIG. 8A-2, the memory sharing control device 800a may not have a function of the network adapter.

FIG. 8B-1 is a schematic diagram of a structure of a computer device 80b according to an embodiment of this application. As shown in FIG. 8B-1, the computer device 80b includes a processor resource pool including a plurality of processors 810b (a processor 810b to a processor 810b+N), a memory sharing control device 800b, a shared memory pool including a plurality of memories 820b (a memory 820b to a memory 820b+N), and a bus 840b. The processor resource pool is connected to the bus 840b via the memory sharing control device 800b, and the shared memory pool is connected to the bus 840b. Different from FIG. 8A-1 or FIG. 8A-2, each processor (any one of the processor 810b to the processor 810b+N) in FIG. 8B-1 or FIG. 8B-2 does not have an own local memory, and any memory access request of the processor is implemented by using the memory sharing control device 800b in the shared memory pool including the memories 820b (the memory 820b to the memory 820b+N).

Optionally, the memory sharing control device 800a in FIG. 8B-1 may alternatively include a logical function of a network adapter, so that the memory sharing control device 800b can further access a memory resource of another computer device through a network. This can further expand a range of the shared memory resources, and improve the utilization of the memory resources.

FIG. 8B-2 is a schematic diagram of a structure of another computer device 80b according to an embodiment of this application. As shown in FIG. 8B-2, the computer device 80b further includes a network adapter 830b, and the network adapter 830b is connected to a bus 840b through a Serdes interface. A memory sharing control device 800b may access memory resources of another computer device via the network adapter 830b. In the computer device 80b shown in FIG. 8B-2, the memory sharing control device 800b may not have a function of the network adapter.

The memory sharing control devices 80a in FIG. 8A-1 and FIG. 8A-2 and the memory sharing control devices 80b in FIG. 8B-1 and FIG. 8B-2 may be implemented with reference to the implementations of the memory sharing control device 200 in FIG. 2A or FIG. 2B or the memory sharing control devices 300 in FIG. 7A to FIG. 7F. The processor 810a or the processor 810b may be implemented with reference to the implementations of the processor in FIG. 6, and the memory 820a or the memory 820b may be a memory resource such as a DRAM or a PCM. The network adapter 830a is connected to the bus 840a through a serial interface, for example, the Serdes interface. The network adapter 830b is connected to the bus 840b through a serial interface, for example, the Serdes interface. The bus 840a or the bus 840b may be a PCIe bus.

In the computer device 80a or the computer device 80b, the plurality of processors may quickly access the shared memory pool via the memory sharing control device, and this can improve utilization of memory resources in the shared memory pool. In addition, because the network adapter 830 is connected to the bus through the serial interface, and data transmission latency between the processor and the network adapter does not increase significantly as a distance increases, the computer device 80a or the computer device 80b may expend, via the memory sharing control device and the network adapter, the memory resources that are accessible by the processor to that of another device connected to the computer device 80a or the computer device 80b. Therefore, a range of memory resources that can be shared by the processor is further expanded, so that the memory resources are shared in a larger range, and utilization of the memory resources is further improved.

It may be understood that the computer device 80a may alternatively include processors having no local memories. These processors access the shared memory pool via the memory sharing control device 800a, to implement memory access. The computer device 80b may alternatively include processors having local memories. The processors may access the local memories, or may access the memories in the shared memory pool via the memory sharing control device 800b. Optionally, when some processors of the computer device 80b have local memories, most memory access of these processors is implemented in the local memories.

FIG. 9A is a schematic diagram of a structure of a system 901 according to an embodiment of this application. As shown in FIG. 9A, the system 901 includes M computer devices, for example, includes devices such as a computer device 80a, a computer device 81a, and a computer device 82a. In this embodiment of this application, M is a positive integer greater than or equal to 3. The M computer devices are connected to each other through a network 910a, and the network 910a may be an Ethernet-based network or a U-bus-based network. The computer device 81a has a similar structure as the computer device 80a. The structure includes a processor resource pool including a plurality of processors (a processor 8012a to a processor 8012a+N), a memory sharing control device 8011a, a shared memory pool including a plurality of memories (a memory 8013a to a memory 8013a+N), a network adapter 8014a, and a bus 8015a. In the computer device 81a, the processor resource pool, the memory sharing control device 8011a, and the network adapter 8014a are separately connected to the bus 8015a, and the shared memory pool (the memory 8013a to the memory 8013a+N) is connected to the memory sharing control device 8011a. A memory access request initiated by the processor in the processor resource pool accesses the shared memory pool via the memory sharing control device 8011a. The memory sharing control device 8011a may be implemented with reference to the implementations of the memory sharing control device 200 in FIG. 2A or FIG. 2B or the memory sharing control devices 300 in FIG. 7A to FIG. 7F. The processor 8012a may be implemented with reference to the implementations of the processor in FIG. 6, and the memory 8013a may be a memory resource such as a DRAM or a PCM. The network adapter 8014a is connected to the bus 8015a through a serial interface, for example, a Serdes interface. The bus 8015a may be a PCIe bus.

In FIG. 9A, each processor has an own local memory, and the local memory is a main memory resource for the processor to access the memory. The processor 8012a is used as an example. The processor 8012a may directly access a local memory 1 of the processor 8012a, and most memory access requests of the processor 8012a may be implemented in the memory 1 of the processor 8012a. When the processor 8012a needs a larger memory to process a traffic burst, the processor 8012a may access a memory resource in the shared memory pool via the memory sharing control device 8011a, to meet a memory resource requirement of the processor 8012a. Optionally, the processor 8012a may alternatively access a local memory of another processor, for example, may access a local memory (a memory N) of the processor N. In other words, the processor 8012a may alternatively access the local memory of the another processor in a memory sharing manner in a NUMA system.

The computer device 82a and another computer device M may have a similar structure as that of the computer device 80a. Details are not described again.

In the system 901, the processor 80a may access, via the memory sharing control device 800a, the network adapter 830a, the network 910a, the network adapter 8014a, and the memory sharing control device 8011a, the shared memory pool including the memory 8013a. In other words, memory resources that are accessible by the processor 810a include memory resources in the computer device 80a and memory resources in the computer device 81a. In a similar manner, the processor 810a may alternatively access memory resources of all the computer devices in the system 901. In this way, when a computer device, for example, the processor 8012a running on the computer device 81a, has low service load, and has a large quantity of memories 8013a in an idle state, but the processor 810a in the computer device 80a needs a large quantity of memory resources to execute an application such as HPC, the memory resources in the computer device 81a may be allocated to the processor 810a in the computer device 80a via the memory sharing control device 800a. In this way, the memory resources in the system 901 are effectively utilized. This not only meets memory requirements of different computer devices for processing services, but also improves utilization of the memory resources in the entire system, so that an aspect of improving the utilization of the memory resources to reduce TCO is more obvious.

It should be noted that, in the system 901 shown in FIG. 9A, the computer device 80a includes the network adapter 830a. During specific implementation, the computer device 80a may alternatively not include the network adapter 830a, and the memory sharing control device 800a may include control logic of the network adapter. In this way, the processor 810a may access another memory resource in the network via the memory sharing control device 8011a. For example, the processor 80a may access, via the memory sharing control device 800a, the network 910a, the network adapter 8014a, and the memory sharing control device 8011a, the shared memory pool including the memory 8013a. Alternatively, when the computer device 81a does not include the network adapter 8014a, but the memory sharing control device 8011a implements the function of the network adapter, the processor 80a may access, via the memory sharing control device 800a, the network 910a, and the memory sharing control device 8011a, the shared memory pool including the memory 8013a.

FIG. 9B is a schematic diagram of a structure of a system 902 according to an embodiment of this application. As shown in FIG. 9B, the system 902 includes M computer devices, for example, includes devices such as a computer device 80b, a computer device 81b, and a computer device 82b, where M is a positive integer greater than or equal to 3. The M computer devices are connected to each other through a network 910b, and the network 910b may be an Ethernet-based network or a U-bus-based network. The computer device 81b has a similar structure as the computer device 80b. The structure includes a processor resource pool including a plurality of processors (a processor 8012b to a processor 8012b+N), a memory sharing control device 8011b, a shared memory pool including a plurality of memories (a memory 8013b to a memory 8013b+N), a network adapter 8014b, and a bus 8015b. The processor resource pool is connected to the bus 8015b via the memory sharing control device 8011b, and each of the shared memory pool and network adapter 8014b is also connected to the bus 8015b. The memory sharing control device 8011b may be implemented with reference to the implementations of the memory sharing control device 200 in FIG. 2A or FIG. 2B or the memory sharing control devices 300 in FIG. 7A to FIG. 7F. The processor 8012b may be implemented with reference to the implementations of the processor in FIG. 6, and the memory 8013b may be a memory resource such as a DRAM or a PCM. The network adapter 8014b is connected to the bus 8015b through a serial interface, for example, a Serdes interface. The bus 8015b may be a PCIe bus.

The computer device 82b and another computer device M may have a similar structure as that of the computer device 80b. Details are not described again.

In the system 902, the processor 810b may access, via the memory sharing control device 800b, the network adapter 830b, the network 910b, and the network adapter 8014b, the shared memory pool including the memory 8013b. In other words, memory resources that are accessible by the processor 810b include memory resources in the computer device 80b and memory resources in the computer device 81b. In a similar manner, the processor 810b may alternatively access memory resources in all the computer devices in the system 902, so that the memory resources in the system 902 are used as shared memory resources. In this way, when a computer device, for example, the processor 8012 running on the computer device 81b, has low service load, and has a large quantity of memories 8013b in an idle state, but the processor 810b in the computer device 80b needs a large quantity of memory resources to execute an application such as HPC, the memory resources in the computer device 81b may be allocated to the processor 810b in the computer device 80b via the memory sharing control device 800b. In this way, the memory resources in the system 902 are effectively utilized. This meets memory requirements of different computer devices for processing services, and improves utilization of the memory resources in the system 902, so that an aspect of improving the utilization of the memory resources to reduce TCO is more obvious.

It should be noted that, in the system 902 shown in FIG. 9B, the computer device 80b includes the network adapter 830b. During specific implementation, the computer device 80b may alternatively not include the network adapter 830b, and the memory sharing control device 800b may include control logic of the network adapter. In this way, the processor 810b may access another memory resource in the network via the memory sharing control device 8011b. For example, the processor 80b may access, via the memory sharing control device 800b, the network 910b, the network adapter 8014b, and the memory sharing control device 8011b, the shared memory pool including the memory 8013b. Alternatively, when the computer device 81b does not include the network adapter 8014b, but the memory sharing control device 8011b implements a function of the network adapter, the processor 80b may access, via the memory sharing control device 800b, the network 910b, and the memory sharing control device 8011b, the shared memory pool including the memory 8013b.

FIG. 9C is a schematic diagram of a structure of a system 903 according to an embodiment of this application. As shown in FIG. 9C, the system 903 includes a computer device 80a, a computer device 81b, and a computer device 82c to a computer device M. An implementation of 80a in the system 903 is the same as that of 80a in a system 901, and an implementation of 81b in the system 903 is the same as that of 81b in a system 902. The computer device 82C to the computer device M may be computer devices similar to the computer device 80a, or may be computer devices similar to the computer device 81b. The system 903 integrates the computer device 80a in the system 910 and the computer device 81b in the system 920, and can also improve utilization of memory resources in the system through memory sharing.

It should be noted that, in the system 901 to the system 903, the computer device needs to transmit a memory access request through a network. Because a network adapter 830b is connected to a memory sharing control device via a serial bus through a Serdes interface, a transmission rate and bandwidth of the serial bus can ensure a data transmission rate. Therefore, although network transmission affects the data transmission rate to some extent, in terms of improving the utilization of the memory resources, in this manner, the utilization of the memory resources can be improved while a memory access rate of a processor is considered.

FIG. 10 is a schematic logical diagram in which the computer device 80a shown in FIG. 8A-1 or FIG. 8A-2, or the computer device 80b shown in FIG. 8B-1 or FIG. 8B-2 implements memory sharing, or may be a schematic logical diagram in which the systems 900 shown in FIG. 9A to FIG. 9C implement memory sharing.

The schematic logical diagram in which the computer device 80a shown in FIG. 8A-1 implements the memory sharing is used as an example. Processors 1 to 4 are any four processors (or cores in the processors) in a processor resource pool including a processor 810a, a memory sharing control device 1000 is a memory sharing control device 800a, and memories 1 to 4 are any four memories in a shared memory pool including a memory 820a. The memory sharing control device 1000 virtualizes four virtual memory devices (namely, a virtual memory 1 to a virtual memory 4 shown in FIG. 10) based on the memory 1 to the memory 4, and an access control table 1001 records a correspondence between the virtual memory devices and the processors. When receiving a memory access request sent by any one of the processors 1 to 4, the memory sharing control device 1000 obtains, based on the access control table 1001, information about a virtual memory device corresponding to the processor that sends the memory access request, and accesses a corresponding memory via the memory controller 1002 based on the obtained information about the virtual memory device.

The schematic logical diagram in which the system 902 shown in FIG. 9B implements the memory sharing is used as an example. Processors 1 to 4 are four processors (or cores in the processors) of any one or more computer devices in the system 902, a memory sharing control device 1000 is a memory sharing control device of any computer device, and memories 1 to 4 are four memories of any one or more computer devices in the system 900. The memory sharing control device 1000 virtualizes four virtual memory devices (namely, a virtual memory 1 to a virtual memory 4 shown in FIG. 10) based on the memory 1 to the memory 4, and an access control table 1001 records a correspondence between the virtual memory devices and the processors. When receiving a memory access request sent by any one of the processors 1 to 4, the memory sharing control device 1000 obtains, based on the access control table 1001, information about a virtual memory device corresponding to the processor that sends the memory access request, and accesses a corresponding memory via the memory controller 1002 based on the obtained information about the virtual memory device.

FIG. 11 is a schematic diagram of a structure of a computer device 1100 according to an embodiment of this application. As shown in FIG. 11, the computer device 1100 includes at least two processing units 1102, a memory sharing control device 1101, and a memory pool, where the processing unit is a processor, a core in a processor, or a combination of cores in a processor, and the memory pool includes one or more memories 1103;
the at least two processing units 1102 are coupled to the memory sharing control device 1101;
the memory sharing control device 1101 is configured to separately allocate a memory from the memory pool to the at least two processing units 1102, and at least one memory in the memory pool is accessible by different processing units in different time periods; and
the at least two processing units 1102 are configured to access the allocated memory via the memory sharing control device 1101.

That the at least two processing units 1102 are coupled to the memory sharing control device 1101 means that the at least two processing units 1102 are separately connected to the memory sharing control device 1101, and any one of the at least two processing units 1102 may be directly connected to the memory sharing control device 1101, or may be connected to the memory sharing control device 1101 via another hardware component (for example, another chip).

For specific implementations of the computer device 1100 shown in FIG. 11, refer to the implementations in FIG. 8A-1, FIG. 8A-2, FIG. 8B-1, and FIG. 8B-2, or refer to the implementations of the computer device (for example, the computer device 80a or the computer device 80b) in FIG. 9A to FIG. 9C, or refer to the implementations shown in FIG. 10. The memory sharing control device 1101 in the computer device 1100 may alternatively be implemented with reference to the implementations of the memory sharing control device 200 in FIG. 2A or FIG. 2B or the memory sharing control devices 300 in FIG. 7A to FIG. 7F. Details are not described again.

The at least two processing units 1102 in the computer device 1100 shown in FIG. 11 can access the at least one memory in the memory pool in different time periods via the memory sharing control device 1101, so that a memory resource requirement of the processing units is met, and utilization of memory resources is improved.

FIG. 12 is a schematic flowchart of a memory sharing control method according to an embodiment of this application. The method may be applied to the computer device shown in FIG. 8A-1, FIG. 8A-2, FIG. 8B-1, or FIG. 8B-2, or may be applied to a computer device (for example, a computer device 80a or a computer device 80b) in FIG. 9A to FIG. 9C. The computer device includes at least two processing units, a memory sharing control device, and a memory pool. The memory pool includes one or more memories. As shown in FIG. 12, the method includes the following steps:
Step 1200: The memory sharing control device receives a first memory access request sent by a first processing unit in the at least two processing units, where the processing unit is a processor, a core in a processor, or a combination of cores in a processor.
Step 1202: The memory sharing control device allocates a first memory from the memory pool to the first processing unit, where the first memory is accessible by a second processing unit in the at least two processing units in another time period.
Step 1204: The first processing unit accesses the first memory via the memory sharing control device.

Based on the method shown in FIG. 12, different processing units access the at least one memory in the memory pool in different time periods, so that a memory resource requirement of the processing units can be met, and utilization of memory resources is improved.

Specifically, the method shown in FIG. 12 may be implemented with reference to the implementations of the memory sharing control device 200 in FIG. 2A or FIG. 2B or the memory sharing control devices 300 in FIG. 7A to FIG. 7F. Details are not described again.

A person of ordinary skill in the art may be aware that, with reference to the examples described in embodiments disclosed in this specification, units and method steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

In the several embodiments provided in this application, the described apparatus embodiments are merely illustrative. For example, unit division is merely logical function division, and may be another division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and components displayed as units may or may not be physical units, in other words, may be located in one position, or may be distributed on a plurality of network units. Some or all of the units may be selected depending on actual requirements to achieve the objectives of the solutions of embodiments of the present invention.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A computer device, comprising at least two processing units, a memory sharing control device, and a memory pool, wherein the processing unit is a processor, a core in a processor, or a combination of cores in a processor, and the memory pool comprises one or more memories;
the at least two processing units are coupled to the memory sharing control device;
the memory sharing control device is configured to separately allocate a memory from the memory pool to the at least two processing units, and at least one memory in the memory pool is accessible by different processing units in different time periods; and
the at least two processing units are configured to access the allocated memory via the memory sharing control device.

2. The computer device according to claim 1, wherein the at least two processing units are connected to the memory sharing control device via a serial bus; and
a first processing unit in the at least two processing units is configured to send a first memory access request in a serial signal form to the memory sharing device via the serial bus, wherein the first memory access request is used to access a first memory allocated to the first processing unit.

3. The computer device according to claim 2, wherein the memory sharing control device comprises a processor interface, and the processor interface is configured to:
receive the first memory access request; and
convert the first memory access request into a second memory access request in a parallel signal form.

4. The computer device according to claim 2 or 3, wherein the memory sharing control device comprises a control unit, and the control unit is configured to:
establish a correspondence between a memory address of the first memory in the memory pool and the first processing unit in the at least two processing units, to allocate the first memory from the memory pool to the first processing unit.

5. The computer device according to claim 2 or 3, wherein the memory sharing control device comprises a control unit, and the control unit is configured to:
virtualize a plurality of virtual memory devices from the memory pool, wherein a physical memory corresponding to a first virtual memory device in the plurality of virtual memory devices is the first memory; and
allocate the first virtual memory device to the first processing unit.

6. The computer device according to claim 5, wherein the control unit is further configured to:
cancel the correspondence between the first virtual memory device and the first processing unit when a preset condition is met; and
establish a correspondence between the first virtual memory device and a second processing unit in the at least two processing units.

7. The computer device according to any one of claims 1 to 6, wherein the memory sharing control device further comprises a cache unit, and the cache unit is configured to: cache data read by any one of the at least two processing units from the memory pool, or cache data evicted by any one of the at least two processing units.

8. The computer device according to claim 7, wherein the memory sharing control device further comprises a prefetch engine, and the prefetch engine is configured to: prefetch, from the memory pool, the data that needs to be read by any one of the at least two processing units, and cache the data in the cache unit.

9. The computer device according to claim 7 or 8, wherein the memory sharing control device further comprises a quality of service QoS engine, and the QoS engine is configured to implement optimized storage of the data that needs to be cached by any one of the at least two processing units in the cache unit.

10. The computer device according to any one of claims 1 to 9, wherein the memory sharing control device further comprises a compression/decompression engine, and the compression/decompression engine is configured to: compress or decompress data related to memory access.

11. The computer device according to any one of claims 1 to 10, wherein the first processing unit further has a local memory, and the local memory is used for memory access of the first processing unit.

12. The computer device according to any one of claims 1 to 11, wherein the plurality of memories comprised in the memory pool are of different medium types.

13. A system, comprising at least two computer devices according to claims 1 to 12, and the at least two computer devices according to claims 1 to 12 are connected to each other through a network.

14. A memory sharing control device, wherein the memory sharing control device comprises a control unit, a processor interface, and a memory interface, wherein
the processor interface is configured to receive memory access requests sent by at least two processing units, wherein the processing unit is a processor, a core in a processor, or a combination of cores in a processor;
the control unit is configured to separately allocate a memory from a memory pool to the at least two processing units, wherein at least one memory in the memory pool is accessible by different processing units in different time periods; and
the control unit is further configured to access, through the memory interface, the memory allocated to the at least two processing units.

15. The memory sharing control device according to claim 14, wherein
the processor interface is further configured to receive, via a serial bus, a first memory access request sent in a serial signal form by a first processing unit in the at least two processing units, wherein the first memory access request is used to access a first memory allocated to the first processing unit.

16. The memory sharing control device according to claim 15, wherein
the processor interface is further configured to: convert the first memory access request into a second memory access request in a parallel signal form, and send the second memory access request to the control unit; and
the control unit is further configured to access the first memory based on the second memory access request through the memory interface.

17. The memory sharing control device according to claim 15 or 16, wherein
the control unit is further configured to establish a correspondence between a memory address of the first memory in the memory pool and the first processing unit, to allocate the first memory from the memory pool to the first processing unit.

18. The memory sharing control device according to claim 15 or 16, wherein
the control unit is further configured to: virtualize a plurality of virtual memory devices from the memory pool, wherein a physical memory corresponding to a first virtual memory device in the plurality of virtual memory devices is the first memory; and
allocate the first virtual memory device to the first processing unit.

19. The memory sharing control device according to claim 18, wherein
the control unit is further configured to: cancel a correspondence between the first virtual memory device and the first processing unit when a preset condition is met, and establish a correspondence between the first virtual memory device and a second processing unit in the at least two processing units.

20. The memory sharing control device according to any one of claims 14 to 19, wherein the memory sharing control device further comprises a cache unit; and
the cache unit is configured to: cache data read by any one of the at least two processing units from the memory pool, or cache data evicted by any one of the at least two processing units.

21. The memory sharing control device according to claim 20, wherein the memory sharing control device further comprises a prefetch engine, and the prefetch engine is configured to: prefetch, from the memory pool, the data that needs to be read by any one of the at least two processing units, and cache the data in the cache unit.

22. The memory sharing control device according to claim 20 or 21, wherein the memory sharing control device further comprises a quality of service QoS engine; and
the QoS engine is configured to implement optimized storage of the data that needs to be cached by any one of the at least two processing units in the cache unit.

23. The memory sharing control device according to any one of claims 14 to 22, wherein the memory sharing control device further comprises a compression/decompression engine; and
the compression/decompression engine is configured to: compress or decompress data related to memory access.

24. A memory sharing control method, wherein the method is applied to a computer device, the computer device comprises at least two processing units, a memory sharing control device, and a memory pool, the memory pool comprises one or more memories, and the method comprises:
receiving, by the memory sharing control device, a first memory access request sent by a first processing unit in the at least two processing units, wherein the processing unit is a processor, a core in a processor, or a combination of cores in a processor;
allocating, by the memory sharing control device, a first memory from the memory pool to the first processing unit, wherein the first memory is accessible by a second processing unit in the at least two processing units in another time period; and
accessing, by the first processing unit, the first memory via the memory sharing control device.

25. The method according to claim 24, wherein the method further comprises:
receiving, by the memory sharing control device via a serial bus, a first memory access request sent in a serial signal form by the first processing unit in the at least two processing units, wherein the first memory access request is used to access the first memory allocated to the first processing unit.

26. The method according to claim 25, wherein the method further comprises:
converting, by the memory sharing control device, the first memory access request into a second memory access request in a parallel signal form, and accessing the first memory based on the second memory access request.

27. The method according to claim 25 or 26, wherein the method further comprises:
establishing, by the memory sharing control device, a correspondence between a memory address of the first memory in the memory pool and the first processing unit in the at least two processing units.

28. The method according to claim 25 or 26, wherein the method further comprises:
virtualizing, by the memory sharing control device, a plurality of virtual memory devices from the memory pool, wherein a physical memory corresponding to a first virtual memory device in the plurality of virtual memory devices is the first memory; and
allocating, by the memory sharing control device, the first virtual memory device to the first processing unit.

29. The method according to claim 28, wherein the method further comprises:
canceling, by the memory sharing control device, a correspondence between the first virtual memory device and the first processing unit when a preset condition is met, and establishing a correspondence between the first virtual memory device and the second processing unit in the at least two processing units.

30. The method according to any one of claims 24 to 29, wherein the method further comprises:
caching, by the memory sharing control device, data read by any one of the at least two processing units from the memory pool, or caching data evicted by any one of the at least two processing units.

31. The method according to claim 30, wherein the method further comprises:
prefetching, by the memory sharing control device from the memory pool, the data that needs to be read by any one of the at least two processing units, and caching the data.

32. The method according to claim 30 or 31, wherein the method further comprises:
controlling, by the memory sharing control device, optimized storage of the data that needs to be cached by any one of the at least two processing units in a cache storage medium.

33. The method according to any one of claims 24 to 32, wherein the method further comprises:
compressing or decompressing, by the memory sharing control device, data related to memory access of any one of the at least two processing units.
